# EUROPEAN PATENT APPLICATION

(11) **EP 4 586 699 A1**
(43) Date of publication of application: **16.07.2025**
(21) Application number: 23881725.8
(22) Date of filing: 19.10.2023
(51) Int. Cl.: H04W 52/02

(54) **COMMUNICATION METHOD AND APPARATUS**

(30) Priority: 25.10.2022 CN 202211312567
(71) Applicant: Huawei Technologies Co., Ltd., Shenzhen, Guangdong 518129 (CN)
(72) Inventor: LI, Chenwan, Shenzhen, Guangdong 518129 (CN); WU, Yiling, Shenzhen, Guangdong 518129 (CN); CHEN, Lei, Shenzhen, Guangdong 518129 (CN)
(74) Representative: Goddar, Heinz J.
(86) International application number: PCT/CN2023/125401
(87) International publication number: WO 2024/088147

(57) **Abstract**

A communication method and apparatus are provided, and relate to the field of communication technologies, to prevent terminal devices from being repeatedly read while performing inventory on the terminal devices at a plurality of coverage levels. This reduces power consumption of the terminal devices, and improves an inventory rate. The method may include: When indicating a terminal device to perform access, a network device may also indicate an identifier of an event or a session that triggers access; the terminal device initiates access; and when receiving a second access indication triggered by a same event or session, the terminal device may determine not to make a response. In this way, the terminal device is not repeatedly read based on a same event/session/coverage level.

## Description

This application claims priority to Chinese Patent Application No. 202211312567.3, filed with the China National Intellectual Property Administration on October 25, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A radio frequency identification (radio frequency identification, RFID) technology is a non-contact automatic identification technology. An RFID system usually includes a reader (Reader) and a tag (Tag). The reader may perform operations such as select (select), inventory (inventory), and access (access) on the tag.

The inventory operation is used as an example. For example, the reader may select, using paging signaling or select signaling, a tag that matches a signaling condition, to set a state of an inventoried flag bit, for example, set a session 1 (session 1) of the inventoried flag bit from a state A to a state B, and for a tag that does not match the signaling condition, set the session 1 of the inventoried flag bit from the state B to the state A.

Currently, the reader performs inventory on the tag based on one piece of paging signaling or select signaling. In a process of inventory that is based on the signaling, a state of a session of the inventoried tag is flipped. In this way, a same tag is not read a plurality of times in a same inventory round.

However, the foregoing inventory process is performed for a single coverage level. How to implement inventory on tags at a plurality of coverage levels and how to prevent the tags from being repeatedly read in an inventory process become technical problems that need to be urgently resolved.

### SUMMARY

This application provides a communication method and apparatus, to prevent tags at a plurality of coverage levels from being repeatedly read while performing inventory on the tags. This reduces power consumption of the tags, and improves an inventory rate.

According to a first aspect, an embodiment of this application provides a communication method. The method includes: A terminal device receives first information from a network device; the terminal device responds to the first information, where the first information indicates the terminal device to access a network, the first information includes first identification information, and the first identification information identifies one or more of the following: a first event, a first session, and a first coverage level; the terminal device receives second information from the network device; and the terminal device determines that the second information includes the first identification information, and skips responding to the second information, where the second information indicates the terminal device to access a network.

According to the first aspect, the first identification information is carried in the information (for example, the first information or the second information) indicating the terminal device to access the network, to indicate that the information is triggered by the first event, the first session, or the first coverage level. When the terminal device receives, for the first time, the information (for example, the first information) carrying the first identification information, the terminal device may respond to the information. When the terminal device receives again the information (for example, the second information) carrying the first identification information, the terminal device may not respond again to the information. In this way, when inventory performed on terminal devices at a plurality of coverage levels is implemented, the terminal devices are not repeatedly read, power consumption of the terminal devices is reduced, and an inventory rate is improved.

In a possible design, the first information is broadcast information, multicast information, paging signaling, or select signaling; and/or the second information is broadcast information, multicast information, paging signaling, or select signaling.

Based on the possible design, a plurality of feasible solutions are provided for designing the first information.

In a possible design, that the terminal device determines that the second information includes the first identification information, and skips responding to the second information includes: The first information further includes first configuration information, where the first configuration information is configuration information of a first timer; and the terminal device determines that the first timer does not expire, and skips respond to the second information.

Based on this possible design, the terminal device may start the first timer when responding to the first information carrying the first identification information. If the terminal device receives, before the first timer expires, another piece of information (for example, the second information carrying the first identification information) that is triggered by the first identification information and that indicates the terminal device to access the network, the terminal device may not respond to the information. In this way, the terminal device is not repeatedly read within valid duration of the first timer.

In a possible design, the terminal device stores the first identification information; and the terminal device determines that a quantity of pieces of identification information stored by the terminal device is greater than or equal to a first threshold M, and the terminal device overwrites an event corresponding to an i^{th} piece of identification information with an event corresponding to an (M+i)^{th} piece of identification information, where i is greater than or equal to 1.

Based on this possible design, when a quantity of events maintained by the terminal device reaches a maximum value, the terminal device may overwrite a previously maintained event with a newly triggered event, so that the terminal device can process the newly triggered event in time.

In a possible design, after the terminal device responds to the first information, the method further includes: The terminal device adjusts a first state to one or more of the following: a first inventory state, a second inventory state, an access success state, an access failure state, an idle state, and a connected state.

Based on this possible design, the terminal device may adjust the first state after receiving a communication end indication sent by the network device.

In a possible design, the terminal device receives first indication information from the network device, where the first indication information indicates the terminal device to clear the stored identification information.

In a possible design, the terminal device receives first indication information from the network device, where the first indication information includes the first identification information, and the first indication information indicates the terminal device to clear the first identification information.

Based on the foregoing two possible designs, in consideration of a case in which overlapping coverage exists between network devices, to avoid a case in which the terminal device cannot be read due to the fact that a plurality of network devices use same identification information (for example, the first identification information) without negotiation to identify different events/sessions/coverage levels, the network device may send the first indication information to the terminal device when performing initial inventory on the terminal device, to indicate the terminal device to clear the stored identification information. Alternatively, the network device may send first indication information when the network device needs to repeatedly perform inventory on a terminal device for an event, for a session, or at a coverage level. The terminal device clears the stored identification information (for example, the first identification information) based on the first indication information, to avoid the case in which the terminal device cannot be read due to the fact that the plurality of network devices use the same identification information.

In a possible design, the first information further includes area identification information, the area identification information indicates one or more areas associated with the first identification information, and the first identification information is valid in the area indicated by the area identification information.

In a possible design, the area identification information includes one or more of the following: identification information of one or more areas, identification information of one or more core network devices, and identification information of one or more public land mobile networks PLMNs.

Based on the foregoing two possible designs, the terminal device may still be repeatedly read if the terminal device moves at a boundary between two core network devices, or moves in an overlapping area between network devices connected to two core network devices, or moves in an overlapping area between two large areas. In this case, the core network device may further send area identification information to the terminal device through the network device, so that the terminal device still cannot be repeatedly read when the terminal device moves in a larger area, for example, moves in coverage areas of different core network devices.

In a possible design, the terminal device receives configuration information of a second timer from the network device; the terminal device determines that data transmission is completed or communication ends, and starts the second timer; and the terminal device skips receiving downlink information before the second timer expires.

Based on this possible design, the terminal device may start the second timer when determining that data transmission is completed or communication ends. Before the second timer expires, the terminal device skips receiving downlink information (or the terminal device enters a sleep state), to prevent the terminal device from being repeatedly read within valid time of the second timer. In this simple manner, the first identification information does not need to be stored, and the manner is more applicable to a terminal device (for example, a passive tag) that is difficult to store information.

In a possible design, it is determined that the second information does not include the first identification information, and the terminal device responds to the second information

According to a second aspect, an embodiment of this application provides a communication method. The method includes: A network device sends first information to a terminal device, where the first information indicates the terminal device to access a network, the first information includes first identification information, and the first identification information indicates one or more of the following: a first event, a first session, and a first coverage level; and the network device sends second information to the terminal device, where the second information indicates the terminal device to access a network.

According to the second aspect, the first identification information is carried in the information (for example, the first information or the second information) indicating the terminal device to access the network, to indicate that the information is triggered by the first event, the first session, or the first coverage level. When the terminal device receives, for the first time, the information (for example, the first information) carrying the first identification information, the terminal device may respond to the information. When the terminal device receives again the information (for example, the second information) carrying the first identification information, the terminal device may not respond again to the information. In this way, when inventory performed on terminal devices at a plurality of coverage levels is implemented, the terminal devices are not repeatedly read, power consumption of the terminal devices is reduced, and an inventory rate is improved.

In a possible design, the second information includes the first identification information, and the network device receives no response of the terminal device to the second information.

In a possible design, the first information is broadcast information, multicast information, paging signaling, or select signaling; and/or the second information is broadcast information, multicast information, paging signaling, or select signaling.

Based on the possible design, a plurality of feasible solutions are provided for designing the first information.

In a possible design, the first information further includes first configuration information, the first configuration information is configuration information of a first timer, and the first timer is used by the terminal device to skip responding to the second information including the first identification information when the terminal device determines that the first timer does not expire.

Based on this possible design, the terminal device may start the first timer when responding to the first information carrying the first identification information. If the terminal device receives, before the first timer expires, another piece of information (for example, the second information carrying the first identification information) that is triggered by the first identification information and that indicates the terminal device to access the network, the terminal device may not respond to the information. In this way, the terminal device is not repeatedly read within valid duration of the first timer.

In a possible design, the network device sends first indication information to the terminal device, where the first indication information indicates the terminal device to clear stored identification information.

In a possible design, the network device sends first indication information to the terminal device, where the first indication information includes the first identification information, and the first indication information indicates the terminal device to clear the first identification information.

Based on the foregoing two possible designs, in consideration of a case in which overlapping coverage exists between network devices, to avoid a case in which the terminal device cannot be read due to the fact that a plurality of network devices use same identification information (for example, the first identification information) without negotiation to identify different events/sessions/coverage levels, the network device may send the first indication information to the terminal device when performing initial inventory on the terminal device, to indicate the terminal device to clear the stored identification information. Alternatively, the network device may send first indication information when the network device needs to repeatedly perform inventory on a terminal device for an event, for a session, or at a coverage level. The terminal device clears the stored identification information (for example, the first identification information) based on the first indication information, to avoid the case in which the terminal device cannot be read due to the fact that the plurality of network devices use the same identification information.

In a possible design, the first information further includes area identification information, the area identification information indicates one or more areas associated with the first identification information, and the first identification information is valid in the area indicated by the area identification information.

In a possible design, the area identification information includes one or more of the following: identification information of one or more areas, identification information of one or more core network devices, and identification information of one or more public land mobile networks PLMNs.

Based on the foregoing two possible designs, the terminal device may still be repeatedly read if the terminal device moves at a boundary between two core network devices, or moves in an overlapping area between network devices connected to two core network devices, or moves in an overlapping area between two large areas. In this case, the core network device may further send area identification information to the terminal device through the network device, so that the terminal device still cannot be repeatedly read when the terminal device moves in a larger area, for example, moves in coverage areas of different core network devices.

In a possible design, the network device sends configuration information of a second timer to the terminal device, where the second timer is used by the terminal device to skip receiving downlink information before the second timer expires.

Based on this possible design, the terminal device may start the second timer when determining that data transmission is completed or communication ends. Before the second timer expires, the terminal device skips receiving downlink information (or the terminal device enters a sleep state), to prevent the terminal device from being repeatedly read within valid time of the second timer. In this simple manner, the first identification information does not need to be stored, and the manner is more applicable to a terminal device (for example, a passive tag) that is difficult to store information.

In a possible design, the network device receives, from a core network device, one or more of the following: the first information, the second information, the first indication information, and the configuration information of the second timer, where the first indication information indicates the terminal device to clear the stored identification information, or the first indication information includes the first identification information, and the first indication information indicates the terminal device to clear the first identification information; and the second timer is used by the terminal device to skip receiving the downlink information before the second timer expires.

According to a third aspect, an embodiment of this application provides a communication method. The method may include: A core network device sends first information to a network device, where the first information indicates the terminal device to access a network, the first information includes first identification information, and the first identification information indicates one or more of the following: a first event, a first session, and a first coverage level; and the core network device sends second information to the network device, where the second information indicates the terminal device to access a network.

According to the third aspect, the first identification information is carried in the information (for example, the first information or the second information) indicating the terminal device to access the network, to indicate that the information is triggered by the first event, the first session, or the first coverage level. When the terminal device receives, for the first time, the information (for example, the first information) carrying the first identification information, the terminal device may respond to the information. When the terminal device receives again the information (for example, the second information) carrying the first identification information, the terminal device may not respond again to the information. In this way, when inventory performed on terminal devices at a plurality of coverage levels is implemented, the terminal devices are not repeatedly read, power consumption of the terminal devices is reduced, and an inventory rate is improved.

In a possible design, the second information includes the first identification information, and the core network device receives no response of the terminal device to the second information.

In a possible design, the first information is broadcast information, multicast information, paging signaling, or select signaling; and/or the second information is broadcast information, multicast information, paging signaling, or select signaling.

Based on the possible design, a plurality of feasible solutions are provided for designing the first information.

In a possible design, the first information further includes first configuration information, the first configuration information is configuration information of a first timer, and the first timer is used by the terminal device to skip responding to the second information including the first identification information when the terminal device determines that the first timer does not expire.

Based on this possible design, the terminal device may start the first timer when responding to the first information carrying the first identification information. If the terminal device receives, before the first timer expires, another piece of information (for example, the second information carrying the first identification information) that is triggered by the first identification information and that indicates the terminal device to access the network, the terminal device may not respond to the information. In this way, the terminal device is not repeatedly read within valid duration of the first timer.

In a possible design, the core network device sends first indication information to the network device, where the first indication information indicates the terminal device to clear stored identification information.

In a possible design, the core network device sends first indication information to the network device, where the first indication information includes the first identification information, and the first indication information indicates the terminal device to clear the first identification information.

Based on the foregoing two possible designs, in consideration of a case in which overlapping coverage exists between network devices, to avoid a case in which the terminal device cannot be read due to the fact that a plurality of network devices use same identification information (for example, the first identification information) without negotiation to identify different events/sessions/coverage levels, the network device may send the first indication information to the terminal device when performing initial inventory on the terminal device, to indicate the terminal device to clear the stored identification information. Alternatively, the network device may send first indication information when the network device needs to repeatedly perform inventory on a terminal device for an event, for a session, or at a coverage level. The terminal device clears the stored identification information (for example, the first identification information) based on the first indication information, to avoid the case in which the terminal device cannot be read due to the fact that the plurality of network devices use the same identification information.

In a possible design, the first information further includes area identification information, the area identification information indicates one or more areas associated with the first identification information, and the first identification information is valid in the area indicated by the area identification information.

In a possible design, the area identification information includes one or more of the following: identification information of one or more areas, identification information of one or more core network devices, and identification information of one or more public land mobile networks PLMNs.

Based on the foregoing two possible designs, the terminal device may still be repeatedly read if the terminal device moves at a boundary between two core network devices, or moves in an overlapping area between network devices connected to two core network devices, or moves in an overlapping area between two large areas. In this case, the core network device may further send area identification information to the terminal device through the network device, so that the terminal device still cannot be repeatedly read when the terminal device moves in a larger area, for example, moves in coverage areas of different core network devices.

In a possible design, the core network device sends configuration information of a second timer to the network device, where the second timer is used by the terminal device to skip receiving downlink information before the second timer expires.

Based on this possible design, the terminal device may start the second timer when determining that data transmission is completed or communication ends. Before the second timer expires, the terminal device skips receiving downlink information (or the terminal device enters a sleep state), to prevent the terminal device from being repeatedly read within valid time of the second timer. In this simple manner, the first identification information does not need to be stored, and the manner is more applicable to a terminal device (for example, a passive tag) that is difficult to store information.

According to a fourth aspect, an embodiment of this application provides a communication method. The method includes: A first terminal device receives third information from a network device, receives fourth information from the network device, and performs random access based on the third information and an access resource indicated by the fourth information, where the third information is used to select one or more terminal devices to access a network, the third information is associated with a second coverage level, the one or more terminal devices include the first terminal device, the fourth information indicates the access resource, the fourth information is associated with a third coverage level, and a coverage area corresponding to the third coverage level is less than a coverage area corresponding to the second coverage level; and the first terminal device receives fifth information from the network device, determines that the first terminal device successfully performs access based on the access resource indicated by the fourth information, determines that data transmission is completed or communication ends, and skips responding to the fifth information, where the fifth information indicates an access resource.

According to the fourth aspect, the network device may first page all terminal devices by using a maximum coverage level, and then sequentially trigger, by using different coverage levels, the terminal devices to access the network, and a terminal device that has responded to a coverage level may not perform access again. This prevents the terminal devices at different coverage levels from being repeatedly read, and reduces network resource (for example, spectrum utilization) overheads.

In a possible design, the second coverage level is associated with a first transmission parameter. The first transmission parameter includes one or more of the following: a first repetition count, a first modulation and coding scheme, and a first transmission bandwidth of a bit/a block/information. The third coverage level is associated with a second transmission parameter. The second transmission parameter includes one or more of the following: a second repetition count, a second modulation and coding scheme, and a second transmission bandwidth of a bit/a block/information.

In a possible design, the first repetition count is greater than the second repetition count; or a modulation order of the first modulation and coding scheme is lower than that of the second modulation and coding scheme; or the first transmission bandwidth is less than the second transmission bandwidth.

Based on the foregoing two possible designs, a feasible solution is provided for the network device to send the third information, the fourth information, and the fifth information based on the second coverage level and the third coverage level.

In a possible design, the fifth information is associated with the second coverage level.

In a possible design, the fourth information includes a first flag bit, and that the first terminal device performs random access based on the third information and an access resource indicated by the fourth information includes: determining that a flag bit of the first terminal device is the first flag bit, and the first terminal device performs random access based on the access resource indicated by the fourth information; and determining that the first terminal device successfully performs access, and the first terminal device adjusts the first flag bit to a second flag bit.

Based on this possible design, if the terminal device supports a flag bit, the fourth information may include the first flag bit. When receiving the fourth information, the first terminal device may determine whether the flag bit of the first terminal device is the first flag bit included in the fourth information. If determining that the flag bit of the first terminal device is the first flag bit, the first terminal device may perform random access based on the access resource indicated by the fourth information. When determining that the first terminal device successfully performs access, the first terminal device may adjust the first flag bit to the second flag bit (that is, flag bit flipping). Subsequently, when the network device selects the terminal device with the first flag bit for access, the first terminal device may not make a response, to avoid repeated reading.

In a possible design, the fifth information includes a first flag bit, and the method further includes: determining that a flag bit of the first terminal device is the first flag bit, and the first terminal device performs random access based on the access resource indicated by the fifth information; and determining that the first terminal device successfully performs access, and the first terminal device adjusts the first flag bit to a second flag bit; or determining that a flag bit of the first terminal device is a second flag bit, and the first terminal device skips responding to the fifth information.

Based on this possible design, if the terminal device supports a flag bit, the fifth information may include the first flag bit. When receiving the fifth information, the first terminal device may determine whether the flag bit of the first terminal device is the first flag bit included in the fifth information. If determining that the flag bit of the first terminal device is the first flag bit, the first terminal device may perform random access based on the access resource indicated by the fifth information. When determining that the first terminal device successfully performs access, the first terminal device may adjust the first flag bit to the second flag bit (that is, flag bit flipping). Subsequently, when the network device selects the terminal device with the first flag bit for access, the first terminal device may not make a response, to avoid repeated reading.

According to a fifth aspect, an embodiment of this application provides a communication method. The method includes: A network device sends third information to a first terminal device, where the third information is used to select one or more terminal devices to access a network, the third information is associated with a second coverage level, and the one or more terminal devices include the first terminal device; the network device sends fourth information to the first terminal device, and receives a response of the first terminal device to the fourth information, where the fourth information indicates an access resource, the access resource is used by the first terminal device to perform random access, the fourth information is associated with a third coverage level, and a coverage area corresponding to the third coverage level is less than a coverage area corresponding to the second coverage level; and the network device sends fifth information to the first terminal device, and receives no response of the first terminal device to the fifth information, where the fifth information indicates an access resource.

According to the fifth aspect, the network device may first page all terminal devices by using a maximum coverage level, and then sequentially trigger, by using different coverage levels, the terminal devices to access the network, and a terminal device that has responded to a coverage level may not perform access again. This prevents the terminal devices at different coverage levels from being repeatedly read, and reduces network resource (for example, spectrum utilization) overheads.

In a possible design, the second coverage level is associated with a first transmission parameter. The first transmission parameter includes one or more of the following: a first repetition count, a first modulation and coding scheme, and a first transmission bandwidth of a bit/a block/information. The third coverage level is associated with a second transmission parameter. The second transmission parameter includes one or more of the following: a second repetition count, a second modulation and coding scheme, and a second transmission bandwidth of a bit/a block/information.

In a possible design, the first repetition count is greater than the second repetition count; or a modulation order of the first modulation and coding scheme is lower than that of the second modulation and coding scheme; or the first transmission bandwidth is less than the second transmission bandwidth.

Based on the foregoing two possible designs, a feasible solution is provided for the network device to send the third information, the fourth information, and the fifth information based on the second coverage level and the third coverage level.

In a possible design, the fifth information is associated with the second coverage level.

According to a sixth aspect, an embodiment of this application provides a communication method. The method includes: A terminal device receives downlink information from a network device, where the downlink information is transmitted at a fifth coverage level; the terminal device determines a coverage level of the terminal device based on signal strength of the downlink information; and the terminal device responds to the downlink information when determining that the coverage level of the terminal device is equal to the fifth coverage level.

According to the sixth aspect, the terminal device may respond to the downlink information when the coverage level of the terminal device is the same as a coverage level of the received downlink information. In this way, terminal devices at different coverage levels are not repeatedly read.

**In** a possible design, after the terminal device responds to the downlink information, the method further includes: The terminal device adjusts a first state to one or more of the following: a first inventory state, a second inventory state, an access success state, an access failure state, an idle state, and a connected state.

According to a seventh aspect, an embodiment of this application provides a communication method. The method includes: A network device sends downlink information to a terminal device, where the downlink information is transmitted at a fifth coverage level, the downlink information is used by the terminal device to determine a coverage level of the terminal device based on signal strength of the downlink information, and the fifth coverage level and the coverage level of the terminal device are used by the terminal device to respond to the downlink information.

According to the seventh aspect, the terminal device may respond to the downlink information when the coverage level of the terminal device is the same as a coverage level of the received downlink information. In this way, terminal devices at different coverage levels are not repeatedly read.

According to an eighth aspect, an embodiment of this application provides a communication apparatus. The communication apparatus may be used in the terminal device in the first aspect or the possible designs of the first aspect, to implement a function performed by the terminal device. The communication apparatus may be a terminal device, or may be a chip, a system on chip, or the like of the terminal device. The communication apparatus may perform, by hardware or by hardware executing corresponding software, a function performed by the terminal device. The hardware or the software includes one or more modules corresponding to the foregoing function, for example, a transceiver module and a processing module. The transceiver module is configured to: receive first information from a network device, and respond to the first information, where the first information indicates the terminal device to access a network, the first information includes first identification information, and the first identification information identifies one or more of the following: a first event, a first session, and a first coverage level. The transceiver module is further configured to receive second information from the network device, and the transceiver module is further configured to skip responding to the second information when the processing module determines that the second information includes the first identification information, where the second information indicates the terminal device to access a network.

In a possible design, the first information is broadcast information, multicast information, paging signaling, or select signaling; and/or the second information is broadcast information, multicast information, paging signaling, or select signaling.

In a possible design, the first information further includes first configuration information, and the first configuration information is configuration information of a first timer. The transceiver module is further configured to skip responding to the second information when the processing module determines that the first timer does not expire.

In a possible design, the processing module is further configured to store the first identification information; and the processing module is further configured to: determine that a quantity of pieces of identification information stored by the terminal device is greater than or equal to a first threshold M, and overwrite an event corresponding to an i^{th} piece of identification information with an event corresponding to an (M+i)^{th} piece of identification information, where i is greater than or equal to 1.

In a possible design, the processing module is further configured to: after the transceiver module responds to the first information, adjust a first state to one or more of the following: a first inventory state, a second inventory state, an access success state, an access failure state, an idle state, and a connected state.

In a possible design, the transceiver module is further configured to receive first indication information from the network device, where the first indication information indicates the terminal device to clear the stored identification information.

In a possible design, the transceiver module is further configured to receive first indication information from the network device, where the first indication information includes the first identification information, and the first indication information indicates the terminal device to clear the first identification information.

In a possible design, the first information further includes area identification information, the area identification information indicates one or more areas associated with the first identification information, and the first identification information is valid in the area indicated by the area identification information.

In a possible design, the area identification information includes one or more of the following: identification information of one or more areas, identification information of one or more core network devices, and identification information of one or more public land mobile networks PLMNs.

In a possible design, the transceiver module is further configured to receive configuration information of a second timer from the network device; the processing module is further configured to: determine that data transmission is completed or communication ends, and start the second timer; and the transceiver module is further configured to skip receiving downlink information before the second timer expires.

In a possible design, the transceiver module is further configured to respond to the second information when the processing module determines that the second information does not include the first identification information

It should be noted that the modules in the eighth aspect or the possible designs of the eighth aspect can perform the corresponding functions in the method examples in the first aspect. For details, refer to detailed descriptions in the method examples. For beneficial effects, refer to related descriptions in the first aspect. Details are not described herein again.

According to a ninth aspect, an embodiment of this application provides a communication apparatus. The communication apparatus may be used in the network device in the second aspect or the possible designs of the second aspect, to implement a function performed by the network device. The communication apparatus may be a network device, or may be a chip, a system on chip, or the like of the network device. The communication apparatus may perform, by hardware or by hardware executing corresponding software, a function performed by the network device. The hardware or the software includes one or more modules corresponding to the foregoing function, for example, a transceiver module. The transceiver module is configured to: send first information to a terminal device, and send second information to the terminal device, where the first information indicates the terminal device to access a network, the first information includes first identification information, the first identification information indicates one or more of the following: a first event, a first session, and a first coverage level, and the second information indicates the terminal device to access a network.

In a possible design, the second information includes the first identification information, and the transceiver module is further configured to receive no response of the terminal device to the second information.

In a possible design, the first information is broadcast information, multicast information, paging signaling, or select signaling; and/or the second information is broadcast information, multicast information, paging signaling, or select signaling.

In a possible design, the first information further includes first configuration information, the first configuration information is configuration information of a first timer, and the first timer is used by the terminal device to determine that the first timer does not expire and skip responding to the second information including the first identification information.

In a possible design, the transceiver module is further configured to send first indication information to the terminal device, where the first indication information indicates the terminal device to clear stored identification information.

In a possible design, the transceiver module is further configured to send first indication information to the terminal device, where the first indication information includes the first identification information, and the first indication information indicates the terminal device to clear the first identification information.

In a possible design, the first information further includes area identification information, the area identification information indicates one or more areas associated with the first identification information, and the first identification information is valid in the area indicated by the area identification information.

In a possible design, the area identification information includes one or more of the following: identification information of one or more areas, identification information of one or more core network devices, and identification information of one or more public land mobile networks PLMNs.

In a possible design, the transceiver module is further configured to send configuration information of a second timer to the terminal device, where the second timer is used by the terminal device to skip receiving downlink information before the second timer expires.

In a possible design, the transceiver module is further configured to receive, from a core network device, one or more of the following: the first information, the second information, the first indication information, and the configuration information of the second timer, where the first indication information indicates the terminal device to clear the stored identification information, or the first indication information includes the first identification information, and the first indication information indicates the terminal device to clear the first identification information; and the second timer is used by the terminal device to skip receiving the downlink information before the second timer expires.

It should be noted that the modules in the ninth aspect or the possible designs of the ninth aspect can perform the corresponding functions in the method examples in the second aspect. For details, refer to detailed descriptions in the method examples. For beneficial effects, refer to related descriptions in the second aspect. Details are not described herein again.

According to a tenth aspect, an embodiment of this application provides a communication apparatus. The communication apparatus may be used in the core network device in the third aspect or the possible designs of the third aspect, to implement a function performed by the core network device. The communication apparatus may be a core network device, or may be a chip, a system on chip, or the like of the core network device. The communication apparatus may perform by hardware or hardware by executing corresponding software, a function performed by the network device. The hardware or the software includes one or more modules corresponding to the foregoing function, for example, a transceiver module. The transceiver module is configured to: send first information to a network device, and send second information to the network device, where the first information indicates the terminal device to access a network, the first information includes first identification information, the first identification information indicates one or more of the following: a first event, a first session, and a first coverage level, and the second information indicates the terminal device to access a network.

In a possible design, the second information includes the first identification information, and the transceiver module is further configured to receive no response of the terminal device to the second information.

In a possible design, the first information is broadcast information, multicast information, paging signaling, or select signaling; and/or the second information is broadcast information, multicast information, paging signaling, or select signaling.

In a possible design, the first information further includes first configuration information, the first configuration information is configuration information of a first timer, and the first timer is used by the terminal device to: determine that the first timer does not expire, and skip responding to the second information including the first identification information.

In a possible design, the transceiver module is further configured to send first indication information to the network device, where the first indication information indicates the terminal device to clear stored identification information.

In a possible design, the transceiver module is further configured to send first indication information to the network device, where the first indication information includes the first identification information, and the first indication information indicates the terminal device to clear the first identification information.

In a possible design, the first information further includes area identification information, the area identification information indicates one or more areas associated with the first identification information, and the first identification information is valid in the area indicated by the area identification information.

In a possible design, the area identification information includes one or more of the following: identification information of one or more areas, identification information of one or more core network devices, and identification information of one or more public land mobile networks PLMNs.

In a possible design, the transceiver module is further configured to send configuration information of a second timer to the network device, where the second timer is used by the terminal device to skip receiving downlink information before the second timer expires.

It should be noted that the modules in the tenth aspect or the possible designs of the tenth aspect can perform the corresponding functions in the method examples in the third aspect. For details, refer to detailed descriptions in the method examples. For beneficial effects, refer to related descriptions in the third aspect. Details are not described herein again.

According to an eleventh aspect, an embodiment of this application provides a communication apparatus. The communication apparatus may be used in the first terminal device in the fourth aspect or the possible designs of the fourth aspect, to implement a function performed by the first terminal device. The communication apparatus may be a first terminal device, or may be a chip, a system on chip, or the like of the first terminal device. The communication apparatus may perform, by hardware or by hardware executing corresponding software, a function performed by the first terminal device. The hardware or the software includes one or more modules corresponding to the foregoing function, for example, a transceiver module and a processing module. The transceiver module is configured to receive third information from a network device, and receive fourth information from the network device. The processing module is configured to perform random access based on the third information and an access resource indicated by the fourth information, where the third information is used to select one or more terminal devices to access a network, the third information is associated with a second coverage level, the one or more terminal devices include the first terminal device, the fourth information indicates the access resource, the fourth information is associated with a third coverage level, and a coverage area corresponding to the third coverage level is less than a coverage area corresponding to the second coverage level. The transceiver module is further configured to receive fifth information from the network device. The transceiver module is further configured to skip responding to the fifth information when the processing module determines that the first terminal device successfully performs access based on the access resource indicated by the fourth information, and determines that data transmission is completed or communication ends, where the fifth information indicates an access resource.

In a possible design, the second coverage level is associated with a first transmission parameter. The first transmission parameter includes one or more of the following: a first repetition count, a first modulation and coding scheme, and a first transmission bandwidth of a bit/a block/information. The third coverage level is associated with a second transmission parameter. The second transmission parameter includes one or more of the following: a second repetition count, a second modulation and coding scheme, and a second transmission bandwidth of a bit/a block/information.

In a possible design, the first repetition count is greater than the second repetition count; or a modulation order of the first modulation and coding scheme is lower than that of the second modulation and coding scheme; or the first transmission bandwidth is less than the second transmission bandwidth.

In a possible design, the fifth information is associated with the second coverage level.

In a possible design, the fourth information includes a first flag bit. The processing module is further configured to determine that a flag bit of the first terminal device is the first flag bit. The transceiver module is further configured to perform random access based on the access resource indicated by the fourth information. The processing module is further configured to: determine that the first terminal device successfully performs access, and adjust the first flag bit to a second flag bit.

In a possible design, the fifth information includes a first flag bit. The processing module is further configured to determine that a flag bit of the first terminal device is the first flag bit. The transceiver module is further configured to perform random access based on the access resource indicated by the fifth information. The transceiver module is further configured to: determine that the first terminal device successfully performs access, and adjust the first flag bit to a second flag bit; or the transceiver module is further configured to skip responding to the fifth information when the processing module determines that the flag bit of the first terminal device is a second flag bit.

It should be noted that the modules in the eleventh aspect or the possible designs of the eleventh aspect can perform the corresponding functions in the method examples in the fourth aspect. For details, refer to detailed descriptions in the method examples. For beneficial effects, refer to related descriptions in the fourth aspect. Details are not described herein again.

According to a twelfth aspect, an embodiment of this application provides a communication apparatus. The communication apparatus may be used in the network device in the fifth aspect or the possible designs of the fifth aspect, to implement a function performed by the network device. The communication apparatus may be a network device, or may be a chip, a system on chip, or the like of the network device. The communication apparatus may perform, by hardware or by hardware executing corresponding software, a function performed by the network device. The hardware or the software includes one or more modules corresponding to the foregoing function, for example, a transceiver module. The transceiver module is configured to send third information to a first terminal device, where the third information is used to select one or more terminal devices to access a network, the third information is associated with a second coverage level, and the one or more terminal devices include the first terminal device. The transceiver module is further configured to: send fourth information to the first terminal device, and receive a response of the first terminal device to the fourth information, where the fourth information indicates an access resource, the access resource is used by the first terminal device to perform random access, the fourth information is associated with a third coverage level, and a coverage area corresponding to the third coverage level is less than a coverage area corresponding to the second coverage level. The transceiver module is further configured to: send fifth information to the first terminal device, and receive no response of the first terminal device to the fifth information, where the fifth information indicates an access resource.

In a possible design, the second coverage level is associated with a first transmission parameter. The first transmission parameter includes one or more of the following: a first repetition count, a first modulation and coding scheme, and a first transmission bandwidth of a bit/a block/information. The third coverage level is associated with a second transmission parameter. The second transmission parameter includes one or more of the following: a second repetition count, a second modulation and coding scheme, and a second transmission bandwidth of a bit/a block/information.

In a possible design, the first repetition count is greater than the second repetition count; or a modulation order of the first modulation and coding scheme is lower than that of the second modulation and coding scheme; or the first transmission bandwidth is less than the second transmission bandwidth.

In a possible design, the fifth information is associated with the second coverage level.

It should be noted that the modules in the twelfth aspect or the possible designs of the twelfth aspect can perform the corresponding functions in the method examples in the fifth aspect. For details, refer to detailed descriptions in the method examples. For beneficial effects, refer to related descriptions in the fifth aspect. Details are not described herein again.

According to a thirteenth aspect, an embodiment of this application provides a communication apparatus. The communication apparatus may be used in the terminal device in the sixth aspect or the possible designs of the sixth aspect, to implement a function performed by the terminal device. The communication apparatus may be a terminal device, or may be a chip, a system on chip, or the like of the terminal device. The communication apparatus may perform, by hardware or by hardware executing corresponding software, a function performed by the network device. The hardware or the software includes one or more modules corresponding to the foregoing function, for example, a transceiver module and a processing module. The transceiver module is configured to receive downlink information from a network device, where the downlink information is transmitted at a fifth coverage level. The processing module is configured to determine a coverage level of the terminal device based on signal strength of the downlink information. The transceiver module is further configured to respond to the downlink information when the processing module determines that the coverage level of the terminal device is equal to the fifth coverage level.

In a possible design, the processing module is further configured to: after the processing module responds to the downlink information, adjust a first state to one or more of the following: a first inventory state, a second inventory state, an access success state, an access failure state, an idle state, and a connected state.

It should be noted that the modules in the thirteenth aspect or the possible designs of the thirteenth aspect can perform the corresponding functions in the method examples in the sixth aspect. For details, refer to detailed descriptions in the method examples. For beneficial effects, refer to related descriptions in the sixth aspect. Details are not described herein again.

According to a fourteenth aspect, an embodiment of this application provides a communication apparatus. The communication apparatus may be used in the network device in the seventh aspect or the possible designs of the seventh aspect, to implement a function performed by the network device. The communication apparatus may be a network device, or may be a chip, a system on chip, or the like of the network device. The communication apparatus may perform, by hardware or by hardware executing corresponding software, a function performed by the network device. The hardware or the software includes one or more modules corresponding to the foregoing function, for example, a transceiver module and a processing module. The transceiver module is configured to send downlink information to a terminal device, where the downlink information is transmitted at a fifth coverage level, the downlink information is used by the terminal device to determine a coverage level of the terminal device based on signal strength of the downlink information, and the fifth coverage level and the coverage level of the terminal device are used by the terminal device to respond to the downlink information.

It should be noted that the modules in the fourteenth aspect or the possible designs of the fourteenth aspect can perform the corresponding functions in the method examples in the seventh aspect. For details, refer to detailed descriptions in the method examples. For beneficial effects, refer to related descriptions in the seventh aspect. Details are not described herein again.

According to a fifteenth aspect, an embodiment of this application provides a communication apparatus. The communication apparatus includes one or more processors. The one or more processors are configured to run a computer program or instructions. When the one or more processors execute the computer instruction or the instructions, the communication apparatus is enabled to perform the communication method according to any one of the first aspect to the seventh aspect.

In a possible design, the communication apparatus further includes one or more memories, the one or more memories are coupled to the one or more processors, and the one or more memories are configured to store the foregoing computer program or instructions. In a possible implementation, the memory is located outside the communication apparatus. In another possible implementation, the memory is located inside the communication apparatus. In this embodiment of this application, the processor and the memory may alternatively be integrated into one component. In other words, the processor and the memory may alternatively be integrated together. In a possible implementation, the communication apparatus further includes a transceiver. The transceiver is configured to receive information and/or send information.

In a possible design, the communication apparatus further includes one or more communication interfaces, the one or more communication interfaces are coupled to the one or more processors, and the one or more communication interfaces are configured to communicate with a module other than the communication apparatus.

According to a sixteenth aspect, an embodiment of this application provides a communication apparatus. The communication apparatus includes an input/output interface and a logic circuit. The input/output interface is configured to input and/or output information. The logic circuit is configured to perform the communication method according to any one of the first aspect to the seventh aspect, to perform processing based on information and/or generate information.

According to a seventeenth aspect, an embodiment of this application provides a computer-readable storage medium. The computer-readable storage medium stores computer instructions or a program. When the computer instructions or the program is run on a computer, the communication method according to any one of the first aspect to the seventh aspect is performed.

According to an eighteenth aspect, an embodiment of this application provides a computer program product including computer instructions. When the computer program product runs on a computer, the communication method according to any one of the first aspect to the seventh aspect is performed.

According to a nineteenth aspect, an embodiment of this application provides a computer program. When the computer program is run on a computer, the communication method according to any one of the first aspect to the seventh aspect is performed.

For technical effects brought by any one of the designs of the fifteenth aspect to the nineteenth aspect, refer to the technical effects brought by any one of the first aspect to the seventh aspect.

According to a twentieth aspect, an embodiment of this application provides a communication system. The communication system may include the terminal device according to the eighth aspect, the network device according to the ninth aspect, and the core network device according to the tenth aspect; or may include the first terminal device according to the eleventh aspect and the network device according to the twelfth aspect; or may include the terminal device according to the thirteenth aspect and the network device according to the fourteenth aspect.

### BRIEF DESCRIPTION OF DRAWINGS

FIG. 1 is a flowchart of performing select, inventory, and access on a tag by a reader according to an embodiment of this application;
FIG. 2 is a diagram of inventory on tags at a plurality of coverage levels according to an embodiment of this application;
FIG. 3 is a diagram of inventory on a tag in an overlapping coverage area according to an embodiment of this application;
FIG. 4 is a diagram of a communication system according to an embodiment of this application;
FIG. 5 is a diagram of a communication system according to an embodiment of this application;
FIG. 6 is a diagram of a communication system according to an embodiment of this application;
FIG. 7 is a diagram of a composition structure of a communication apparatus according to an embodiment of this application;
FIG. 8 is a flowchart of a communication method according to an embodiment of this application;
FIG. 9 is a flowchart of a communication method according to an embodiment of this application;
FIG. 10 is a diagram of adjusting a first state according to an embodiment of this application;
FIG. 11 is a flowchart of a communication method according to an embodiment of this application;
FIG. 12 is a diagram of composition of a communication apparatus according to an embodiment of this application; and
FIG. 13 is a diagram of a structure of a communication apparatus according to an embodiment of this application.

### DESCRIPTION OF EMBODIMENTS

Before embodiments of this application are described, technical terms used in embodiments of this application are described.

**A radio frequency identification (radio frequency identification, RFID) technology** is a non-contact automatic identification technology, and is mainly used for identity identification and user data reading and writing. An RFID system may usually include a reader (Reader) and a tag (Tag).

**A tag** may also be referred to as an electronic tag or an RFID tag, and may be classified into a passive tag, a semi-active tag, and an active tag. Working energy of the passive tag may be provided by the reader. For example, a part of energy of a continuous wave (continuous wave, CW) sent by the reader may be used for internal processing such as encoding/decoding and modulation/demodulation of the tag. In addition, the continuous wave may be further used as a carrier to carry uplink information of the tag. The passive tag may also be referred to as a passive internet of things (passive internet of things, passive IoT) device. A battery may be included inside a semi-passive tag. Internal processing such as encoding/decoding and modulation/demodulation may be powered by the battery, but the continuous wave of the reader still needs to be used as a carrier.

The tag is simply designed, in which an application layer and air interface signaling may be mixed together to support microwatt-level or 100-microwatt-level power consumption. The tag may perform encoding/decoding and transmission based on an on-off-keying (on-off-keying, OOK) modulation scheme, for example, decode data based on an amplitude modulation scheme and a high/low level. When a plurality of tags communicate with each other, a time division multiplexing manner may be used, and the plurality of tags use a serial reading manner. Because the tags do not support differentiation between frequency domain and code domain, parallel performance of the tags is poor.

**A reader** is a device having a read/write function, for example, may be a handheld or fixed device for reading or writing tag information. Alternatively, the reader may also be understood as a device communicating with the tag, and a form may be a terminal device, a base station, a device having a read/write function, an integrated access and backhaul (integrated access and backhaul, IAB) node, or the like. This is not limited.

For example, in a separated architecture, the reader may include a helper (helper) and a receiver (receiver). Downlink communication may be performed between the helper and the tag, and uplink/downlink communication may be performed between the helper and the receiver through an air interface or a wired connection. The helper may also be referred to as an excitation source.

The helper may be a terminal, or may be a base station or a small cell. Only downlink data transmission is performed between the device and the tag, and uplink/downlink data transmission may be performed between the device and the reader through an air interface or a wired connection.

In the RFID system, the reader may perform operations such as select (select), inventory (inventory), and access (access) on the tag. The select operation is used to select one tag or a group of tags for inventory and access. The inventory operation may be understood as a process in which the reader identifies the tag, and an inventory rate of the RFID tag is an important performance indicator. The access operation may be understood as a process in which the reader interacts with the tag. The tag needs to be identified by the reader and then accessed.

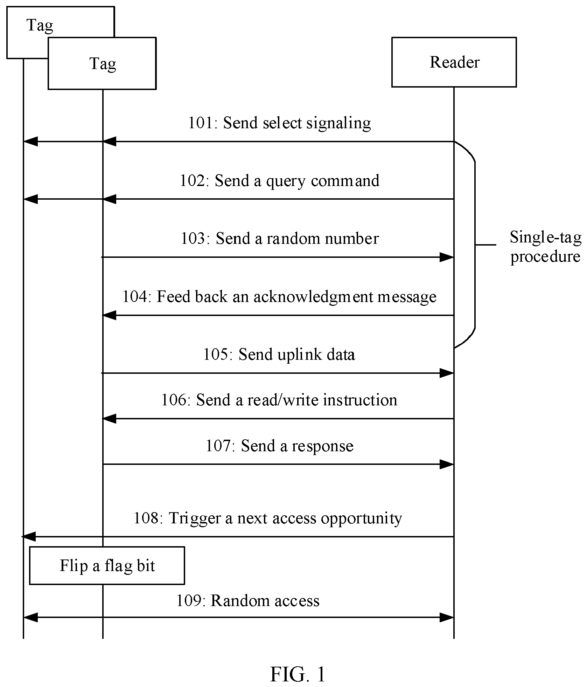

For example, a procedure in which the reader performs select, inventory, and access on the tag may be shown in FIG. 1. As shown in FIG. 1, the procedure includes the following steps.

Step 101: The reader sends select (Select) signaling.

The select signaling may include tag memory information, and the reader may be configured to select one tag or a group of tags for access by sending the select signaling.

Optionally, similarly to a case that the reader sends the select signaling to select one tag or a group of tags for access, the reader may also send paging signaling to page one tag or a group of tags for access.

For example, the reader may select, using the select signaling, a tag that matches a signaling selection condition, to set a state of an inventoried flag bit, for example, set a session 1 (session 1) of the inventoried flag bit from a state A to a state B, and for a tag that does not match the signaling selection condition to set the session 1 of the inventoried flag bit from the state B to the state A.

The inventoried flag bit has four mutually independent sessions, and each session further has two inventoried states: the state A and the state B. The reader may select one session from the four sessions to indicate the tag to perform a setting action.

Alternatively, the select signaling is used to select or page one tag or a group of tags for access, and for a tag matching the selection performed by the reader, the state of the session of the flag bit may be flipped or may not be flipped as indicated by the reader. Specifically, a tag that matches mask information may change the state of the session indicated by the select signaling, for example, change the state to the state A or the state B.

Specifically, as shown in the following table 1, the select signaling may include the following bit fields.

**Table 1**

| | Bit | Description |
|---|---|---|
| Signaling (Command) | 4 | 1010 |
| Target (Target) | 3 | 000: Inventoried (S0); 001: Inventoried (S1); 010: Inventoried (S2); 011: Inventoried (S3); 100: SL; 101: RFU; |
| | | 110: RFU; 111: RFU |
| Action (Action) | 3 | See Table 2 |
| Selected area (MemBank) | 2 | 00: File Type; 01: EPC; 10: TID; 11: File_0 |
| Pointer (Pointer) | EBV | Starting mask address |
| Length (Length) | 8 | Mask length (bits) |
| Mask (Mask) | Variable (Variable) | Mask value |
| Truncate (Truncate) | 1 | 0: disabletruncation; 1: enabletruncation |
| Cyclic redundancy check (CRC) | 16 | CRC-16 |

The target may indicate that the select signaling changes a selected flag (selected flag, SL) or an inventoried (Inventoried) flag bit.

The inventoried (Inventoried) flag bit has four mutually independent sessions, and each session further has two inventoried states: the state A and the state B. For a tag that has been inventoried currently, the state of the session is flipped. This can prevent a same tag from being identified a plurality of times in an inventory round.

The selected flag (SL) includes two states: an asserted state and a deasserted state, and has a function similar to that of the session.

The action is used to change a state of the selected flag or the inventoried flag bit. As shown in the following table 2, when the action indicates 010, it indicates that a tag that meets a selection condition makes no state change, and a tag that does not meet the selection condition performs deasserting setting on the SL, or sets a state of an indicated session (for example, the session 1) of an inventoried flag bit to B.

**Table 2**

| Action | Meeting the selection condition | Not meeting the selection condition |
|---|---|---|
| 000 | Assert SL or Inventoried → A | Deassert SL or Inventoried → B |
| 001 | Assert SL or Inventoried → A | No action |
| 010 | No action | Deassert SL or Inventoried → B |
| 011 | Flip SL or (A → B, B → A) | No action |
| 100 | Deassert SL or Inventoried → B | Assert SL or Inventoried → A |
| 101 | Deassert SL or Inventoried → B | No action |
| 110 | No action | Assert SL or Inventoried → A |
| 111 | No action | Flip SL or (A → B, B → A) |

The MemBank, pointer, length, and mask are used to select a tag whose data in a specific memory bank is consistent with the mask. Only the selected tag can participate in subsequent inventory operations. This can be understood as the selection condition.

Truncate indicates that the tag returns only a part of an electronic product code (electronic product code, EPC).

Step 102: The reader sends a query (Query) command.

The query signaling sent by the reader may be used to initialize an inventory cycle, and may specifically include a specific state of a session of an inventoried flag bit, for example, the state B of the session 1, to select a tag with the state B of the session 1 for access.

The query command may further include a random access resource configuration (for example, a parameter Q), and the tag calculates a maximum quantity of sending slots based on the random access configuration (the parameter Q) and randomly selects an access slot for random access.

For example, the random access resource configuration may include a maximum access slot range.

A plurality of tags selected by the reader may be inventoried and accessed in a time division multiplexing manner. To be specific, after finishing inventorying and accessing a tag, the reader starts to inventory and access a next tag. The following steps are described by using an example in which one tag is inventoried and accessed.

Step 103: The tag sends a random number (random number, RN) to the reader.

For example, the random number may be a 16-bit random number (RN16).

A tag with a state of a session (for example, the state A of the session 1) that matches the query signaling may select a random access opportunity or an access slot.

For example, the tag may calculate a maximum access slot range [0, 2^{Q}-1] based on a value of Q. The tag may randomly select a value in the range, and store the value as a counter. Each time one dedicated signaling query response (QueryRep) is received, counter=counter-1. When the counter is equal to 0, the tag may send a random number, for example, the RN 16.

It should be noted that, if the corresponding slot is 0 after the reader sends the query signaling, a tag whose counter generates an initial value 0 may initiate access after receiving the query signaling.

Step 104: The reader feeds back an acknowledgment (acknowledgment, ACK) message to the tag.

If the reader successfully receives the random number sent by the tag, the reader may send the acknowledgment message to the tag. The acknowledgment message may include the random number sent by the tag to the reader.

After receiving, within specified time, the acknowledgment message that carries the random number sent by the tag, the tag may perform step 105.

Step 105: The tag sends uplink data to the reader.

For example, the uplink data may be an electronic product code (electronic product code, EPC).

Optionally, after step 105, as shown in step 106 and step 107, the reader may further send an instruction to the tag, perform a read/write operation or the like on the tag, and interact with the tag. After receiving the instruction, the tag may respond to the instruction.

Step 108: The reader triggers a next access opportunity.

After ending processing on the tag, the reader may send QueryRep signaling. After receiving the signaling, a tag in communication with the reader flips an inventoried flag bit, for example, sets the inventoried flag bit from the state B to the state A. The signaling may alternatively be used to trigger the next access opportunity, that is, an operation of subtracting 1 is performed on a tag whose counter is not 0. When the counter is equal to 0, access may be initiated.

Step 109: The next tag initiates a random access procedure.

The foregoing process is repeated.

In the foregoing inventory process, the reader performs inventory on the tag based on one piece of paging signaling or select signaling. In a process of inventory that is based on the signaling, a state of a session of the inventoried tag is flipped. In this way, a same tag is not read a plurality of times in a same inventory round.

However, the foregoing inventory process is performed for a single coverage level, and does not support inventory on tags at a plurality of coverage levels. If the design is enhanced to support the plurality of coverage levels, how to implement inventory on the tags at the plurality of coverage levels and how to prevent the tags from being repeatedly read in the inventory process become technical problems that need to be urgently resolved.

Based on the foregoing descriptions of the inventory process supporting a single coverage level, for a plurality of coverage levels, when the reader performs inventory on tags, the reader may perform inventory once for each coverage level. To be specific, the reader may send one piece of paging signaling or select signaling based on each coverage level, and if the reader sends the paging signaling or the select signaling in an order from a low coverage level to a high coverage level, the tag may receive and respond to a plurality of pieces of paging signaling or select signal corresponding to the plurality of coverage levels. That is, a same tag may participate in a plurality of inventory/paging rounds. As a result, the tag is repeatedly read or repeatedly performs access, affecting power consumption of the tag and reducing an inventory rate. If the reader performs paging or selects a tag for access at a high coverage level, a large waste of resources is caused.

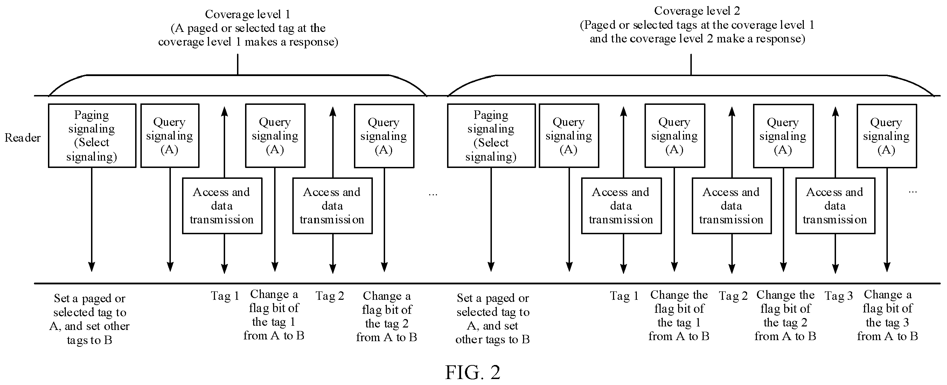

For example, as shown in FIG. 2, a coverage area corresponding to a coverage level 1 is less than a coverage area corresponding to a coverage level 2 (or a coverage level 1 is less than a coverage level 2, or a coverage area corresponding to a coverage level 1 is better than a coverage area corresponding to a coverage level 2, or the like). The reader may send one piece of paging signaling or select signaling based on the coverage level 1, and a paged or selected tag (for example, a tag 1 or a tag 2) may be set to A (or a flag bit is set to A), and other tags are set to B (or flag bits are set to B). After being successfully inventoried based on the procedure shown in FIG. 1, the paged or selected tag (for example, the tag 1 or the tag 2) at the coverage level 1 may communicate with the reader (or access and data transmission). After communication ends, the flag bit is changed from A to B.

The reader may further send one piece of paging signaling or select signaling based on the coverage level 2. Because a coverage area corresponding to the coverage level 2 is greater than a coverage area corresponding to the coverage level 1, both a tag at the coverage level 1 and a tag at the coverage level 2 receive the paging signaling or the select signaling. To be specific, paged or selected tags at the coverage level 1 and the coverage level 2 (for example, the tag 1 and the tag 2 at the coverage level 1 and a tag 3 at the coverage level 2) may be set to A, and other tags are set to B. Further, after being successfully inventoried based on the procedure shown in FIG. 1, the paged or selected tags (for example, the tag 1, the tag 2, and the tag 3) at the coverage level 1 and the coverage level 2 may communicate with the reader. After communication ends, the flag bits are changed from A to B.

Based on the foregoing descriptions, the tags (for example, the tag 1 and the tag 2) at the coverage level 1 receive and respond to the paging signaling or the select signaling sent by the reader based on the coverage level 1, and receive and respond to the paging signaling or the select signaling sent by the reader based on the coverage level 2. As a result, the tags (for example, the tag 1 and the tag 2) at the coverage level 1 are repeatedly inventoried (or repeatedly perform access, are repeatedly read, repeatedly send data, or the like).

When the tag does not support a measurement capability, the tag may not be able to determine a coverage level of the tag. In this case, the tag may respond to any received signaling.

In addition, if the RFID system is transplanted to a cellular network for area networking deployment, a plurality of readers may be deployed in an overlapping manner, and a tag located in an overlapping coverage area of the plurality of readers may also receive and respond to a plurality of pieces of paging signaling or select signaling sent by the plurality of readers. That is, a same tag may participate in a plurality of inventory rounds. As a result, the tag is repeatedly read, affecting power consumption of the tag and reducing an inventory rate.

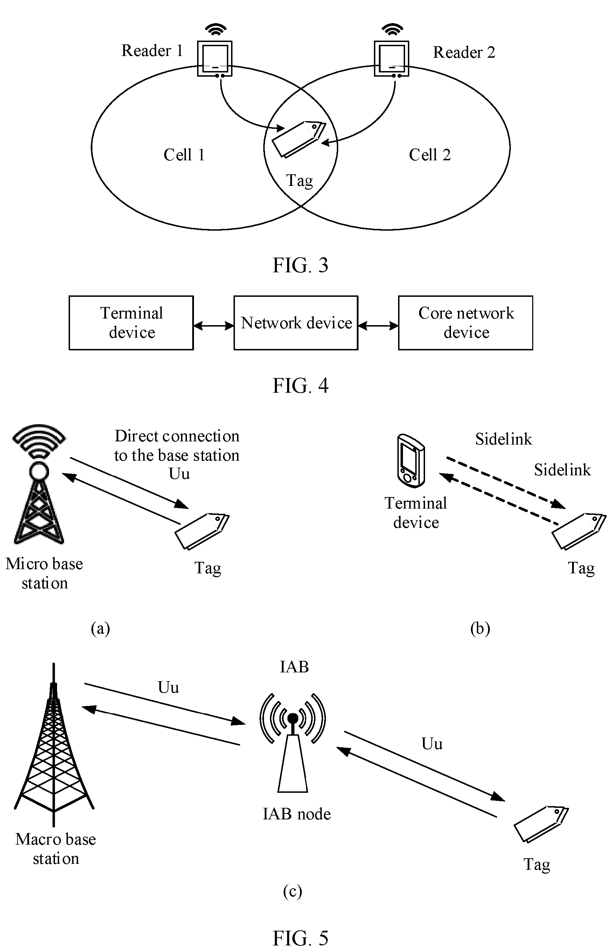

For example, as shown in FIG. 3, a tag in an overlapping area between two cells may be repeatedly read by a reader 1 and a reader 2.

In conclusion, how to implement inventory on tags at a plurality of coverage levels and how to prevent the tags from being repeatedly read in an inventory process become technical problems that need to be urgently resolved.

To resolve the foregoing technical problems, an embodiment of this application provides a communication method. The method may include: A terminal device receives first information from a network device, and responds to the first information, where the first information indicates the terminal device to access a network, the first information includes first identification information, and the first identification information identifies one or more of the following: a first event, a first session, a first coverage level, and a first transaction (transaction); the terminal device receives second information from the network device; and the terminal device determines that the second information includes the first identification information, and skips responding to the second information, where the second information indicates the terminal device to access a network.

In embodiments of this application, the first identification information is carried in the information (for example, the first information or the second information) indicating the terminal device to access the network, to indicate that the information is triggered by the first event, the first session, the first coverage level, or the first transaction. When the terminal device receives, for the first time, the information (for example, the first information) carrying the first identification information, the terminal device may respond to the information. When the terminal device receives again the information (for example, the second information) carrying the first identification information, the terminal device may not respond again to the information. In this way, when inventory performed on terminal devices at the plurality of coverage levels is implemented, the terminal devices are not repeatedly read, power consumption of the terminal devices is reduced, and an inventory rate is improved.

The following describes implementations of embodiments of this application in detail with reference to the accompanying drawings in this specification.

The communication method provided in embodiments of this application may be applied to any communication system. The communication system may be a third generation partnership project (third generation partnership project, 3GPP) communication system like an RFID system, a long term evolution (long term evolution, LTE) system, a fifth generation (fifth generation, 5G) mobile communication system, a new radio (new radio, NR) communication system, or a vehicle-to-everything (vehicle-to-everything, V2X) system. The communication method may be further applied to a system in which LTE and 5G hybrid networking is used, a non-terrestrial network (non-terrestrial network, NTN) system, a device-to-device (device-to-device, D2D) communication system, a machine-to-machine (machine-to-machine, M2M) communication system, an internet of things (internet of things, IoT) system, a universal mobile telecommunications system (universal mobile telecommunications system, UMTS), a code division multiple access (code division multiple access, CDMA) system, another next-generation communication system, for example, a future communication system like 6G, a non-3GPP communication system like a wireless local area network (wireless local area network, WLAN), or the like. This is not limited.

For example, the communication method provided in embodiments of this application may be applied to a communication scenario with ultra-low power consumption, for example, applied to a communication scenario with power consumption of less than a milliwatt level or a microwatt level, for example, applied to an RFID scenario, an X-IoT (where X may be a passive or semi-passive internet of things or the like) scenario, an environment IoT (Ambient IoT) scenario, and a backscatter (backscatter)-based communication scenario.

It should be noted that the foregoing communication systems and communication scenarios applicable to this application are merely examples for description, and communication systems applicable to this application are not limited thereto. This is uniformly described herein, and details are not described below again.

The following uses FIG. 4 as an example to describe the communication system provided in embodiments of this application.

FIG. 4 is a diagram of a communication system according to an embodiment of this application. As shown in FIG. 4, the communication system may include a terminal device, a network device, and a core network device.

In FIG. 4, the terminal device may be located in a coverage area of one or more cells (or carriers) provided by the network device, and there may be one or more cells serving the terminal device. When there are a plurality of cells serving the terminal device, the terminal device may operate in a carrier aggregation (carrier aggregation, CA), dual connectivity (dual connectivity, DC), or coordinated multipoint transmission manner, and at least one cell provides more than one numerology (numerology) and provides a radio resource for the terminal device.

The terminal device may perform air interface communication with the network device through an uplink (uplink, UL) or a downlink (downlink, DL). For example, the terminal device may send uplink data to the network device in an UL direction through a physical uplink shared channel (physical uplink shared channel, PUSCH), and the network device may send downlink data to the terminal device in a DL direction through a physical downlink shared channel (physical downlink shared channel, PDSCH).

Optionally, the terminal device may be a passive terminal device. To be specific, energy and/or a carrier that are/is needed when the terminal device operates may be provided by the network device. The carrier may be used by the terminal device to perform uplink communication. The carrier herein may also be referred to as a continuous wave.

Optionally, the network device in this application may be used as a reader, or the network device may implement a function of a reader. The terminal device may be used as a tag, or the terminal device may be a device including a tag. The terminal device may also implement a function of a reader. The reader may be understood as another type of terminal device.

The tag may be located in a coverage area provided by the reader. When the reader is a terminal device, communication between the reader and the tag may be considered as transmission between terminal devices. When the reader is a network device, communication between the reader and the tag is Uu interface communication, namely, air interface communication.

Optionally, the terminal device in FIG. 4 may be a device having a wireless transceiver function, or a chip or a chip system that may be disposed in the device, and may be configured to provide voice and/or data connectivity for a user. The terminal device may also be referred to as user equipment (user equipment, UE), a terminal (terminal), a mobile station (mobile station, MS), a mobile terminal (mobile terminal, MT), or the like. For example, the terminal device in FIG. 4 may be a handheld device or a vehicle-mounted device that has a wireless connection function, for example, a mobile phone (mobile phone), a tablet computer, a notebook computer, a palmtop computer, or a computer having a wireless transceiver function. The terminal device may alternatively be a mobile internet device (mobile internet device, MID), a wearable device, a virtual reality (virtual reality, VR) terminal, an augmented reality (augmented reality, AR) terminal, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a vehicle-mounted terminal, a vehicle with a vehicle-to-vehicle (vehicle-to-vehicle, V2V) communication capability, an intelligent connected vehicle, an uncrewed aerial vehicle with an uncrewed aerial vehicle-to-uncrewed aerial vehicle (UAV to UAV, U2U) communication capability, or the like. This is not limited.

Optionally, the network device in FIG. 4 may be any device that is deployed in an access network and that can perform wireless communication with the terminal device, and is mainly configured to implement functions such as radio physical control, resource scheduling and radio resource management, radio access control, and mobility management. Specifically, the network device may be a device supporting wired access, or may be a device supporting wireless access. For example, the network device may be an access network (access network, AN) device/a radio access network (radio access network, RAN) device, and includes a plurality of AN/RAN nodes. The AN/RAN node may be a NodeB (NodeB, NB), a macro base station, a micro base station, a relay station, an enhanced NodeB (enhanced NodeB, eNB), a next generation NodeB (NR NodeB, gNB), a radio network controller (radio network controller, RNC), a base station controller (base station controller, BSC), a base transceiver station (base transceiver station, BTS), a home base station (for example, a home evolved NodeB (home evolved NodeB) or a home NodeB (home NodeB, HNB)), a baseband unit (baseband unit, BBU), an access point (access point, AP), a wireless fidelity AP (wireless fidelity AP, Wi-Fi AP), a transmission reception point (transmission reception point, TRP), a transmission point (transmission point, TP), a wireless relay node, a wireless backhaul node (namely, an IAB node) in integrated access and backhaul (integrated access and backhaul, IAB), another type of access node, a reader, a read apparatus, or the like. This is not limited.

Optionally, the network device in FIG. 4 may alternatively be of a central unit (central unit, CU)/distributed unit (distributed unit, DU) architecture. In this case, the network device may include a CU, or include a DU, or include a CU and a DU. The network device including the CU and the DU may split protocol layers of an eNB in an LTE communication system. Functions of some protocol layers are centrally controlled by the CU. Functions of some or all of remaining protocol layers are distributed in the DU, and the CU centrally controls the DU.

Based on the foregoing descriptions of the terminal device and the network device, for example, as shown in (a) in FIG. 5, a base station may be a micro base station (Micro BS), and the micro base station may communicate with a tag through a Uu interface. As shown in (b) in FIG. 5, the terminal device may communicate with a tag through a sidelink (sidelink, SL). As shown in (c) in FIG. 5, a base station may be an IAB node, and the IAB node may communicate with a macro base station (Macro BS) through a Uu interface, and communicate with a tag through a Uu interface.

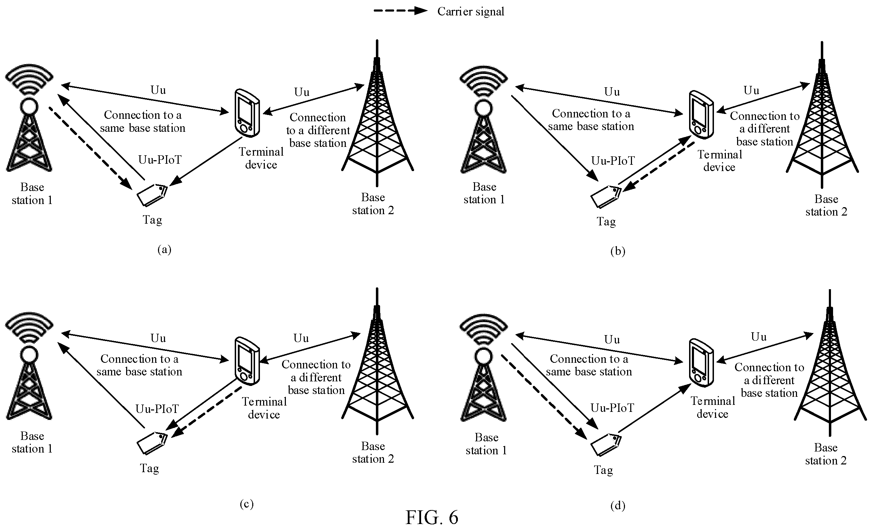

In still another example, a separated architecture may alternatively be supported in communication between the terminal device and the network device. As shown in FIG. 6, an example in which the terminal device is used as an excitation source (helper) is used. Uplink communication or downlink communication may be performed between the terminal device and a base station. As shown in (a) in FIG. 6, a base station 1 may provide a carrier signal for a tag, uplink communication may be performed between the base station 1 and the tag, and downlink communication may be performed between the tag and the terminal device. Alternatively, as shown in (b) in FIG. 6, the terminal device may provide a carrier signal for a tag, downlink communication may be performed between a base station 1 and the tag, and uplink communication may be performed between the tag and the terminal device. Alternatively, as shown in (c) in FIG. 6, the terminal device may provide a carrier signal for a tag, uplink communication may be performed between a base station 1 and the tag, and downlink communication may be performed between the tag and the terminal device. Alternatively, as shown in (d) in FIG. 6, a base station 1 may provide a carrier signal for a tag, downlink communication may be performed between the base station 1 and the tag, and uplink communication may be performed between the tag and the terminal device.

It should be noted that, in FIG. 6, a base station that can communicate with the tag and can also communicate with the terminal device may be referred to as a same base station (for example, the base station 1) between the tag and the terminal device. A base station that can only communicate with the tag, or a base station that can only communicate with the terminal device may be referred to as a different base station (for example, a base station 2) between the tag and the terminal device.

Optionally, the core network device in FIG. 4 may be a general term of a plurality of functional entities used for user management, data transmission, and a network device configuration.

For example, the core network device may include network elements such as a mobility management network element, a session management network element, and a user plane network element, and a network element exposure network element. This is not limited.

The mobility management network element may be an access and mobility management function (access and mobility management function, AMF). The session management network element may be a session management function (session management function, SMF). The user plane network element may be a user plane function (user plane function, UPF). The network exposure network element may be a network exposure function (network exposure function, NEF).

It should be noted that the terminal device, the network device, and the core network device in embodiments of this application each may be one or more chips, or may be a system on chip (system on chip, SoC), or the like. FIG. 4 is merely an example accompany drawing, and a quantity of devices included in FIG. 4 is not limited. In addition, in addition to the devices shown in FIG. 4, the communication system may further include another device. Names of the devices and the links in FIG. 4 are not limited. In addition to the names shown in FIG. 4, the devices and the links may have other names. This is not limited.

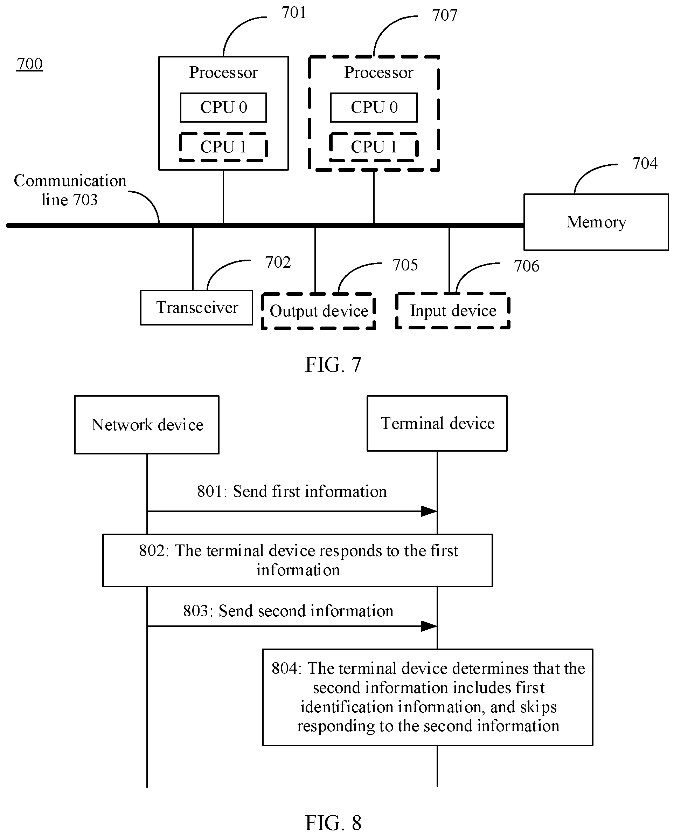

During specific implementation, as shown in FIG. 4, FIG. 5, or FIG. 6, for example, each terminal device, each network device, and each core network device may use a composition structure shown in FIG. 7, or include components shown in FIG. 7. FIG. 7 is a diagram of composition of a communication apparatus 700 according to an embodiment of this application. The communication apparatus 700 may be a terminal device or a chip or a system on chip in the terminal device, or may be a network device or a chip or a system on chip in the network device, or may be a core network device or a chip or a system on chip in the core network device. As shown in FIG. 7, the communication apparatus 700 includes a processor 701, a transceiver 702, and a communication line 703.

Further, the communication apparatus 700 may include a memory 704. The processor 701, the memory 704, and the transceiver 702 may be connected through the communication line 703.

The processor 701 is a central processing unit (central processing unit, CPU), a generalpurpose processor, a network processor (network processor, NP), a digital signal processor (digital signal processor, DSP), a microprocessor, a microcontroller, a programmable logic device (programmable logic device, PLD), or any combination thereof. Alternatively, the processor 701 may be another apparatus having a processing function, for example, a circuit, a component, or a software module. This is not limited.

The transceiver 702 is configured to communicate with another device or another communication network. The another communication network may be an Ethernet, a radio access network (radio access network, RAN), a wireless local area network (wireless local area network, WLAN), or the like. The transceiver 702 may be a module, a circuit, a transceiver, or any apparatus that can implement communication.

The communication line 703 is configured to transmit information between the components included in the communication apparatus 700.

The memory 704 is configured to store instructions. The instructions may be a computer program.

The memory 704 may be a read-only memory (read-only memory, ROM) or another type of static storage device that can store static information and/or instructions; may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or the like. This is not limited.

It should be noted that the memory 704 may exist independently of the processor 701, or may be integrated with the processor 701. The memory 704 may be configured to store instructions, program code, some data, or the like. The memory 704 may be located inside the communication apparatus 700, or may be located outside the communication apparatus 700. This is not limited. The processor 701 is configured to execute the instructions stored in the memory 704, to implement a communication method provided in the following embodiment of this application.

In an example, the processor 701 may include one or more CPUs, for example, a CPU 0 and a CPU 1 in FIG. 7.

In an optional implementation, the communication apparatus 700 includes a plurality of processors. For example, in addition to the processor 701 in FIG. 7, the communication apparatus 700 may further include a processor 707.

In an optional implementation, the communication apparatus 700 further includes an output device 705 and an input device 706. For example, the input device 706 is a device, for example, a keyboard, a mouse, a microphone, or a joystick, and the output device 705 is a device, for example, a display or a speaker (speaker).

It should be noted that the communication apparatus 700 may be a desktop computer, a portable computer, a network server, a mobile phone, a tablet computer, a wireless terminal, an embedded device, a chip system, or a device having a structure similar to that in FIG. 7. In addition, a composition structure shown in FIG. 7 does not constitute a limitation on the communication apparatus. In addition to the components shown in FIG. 7, the communication apparatus may include more or fewer components than those shown in the figure, or some components may be combined, or different component arrangements may be used.

In this embodiment of this application, the chip system may include a chip, or may include a chip and another discrete component.

In addition, actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited.

With reference to the communication system shown in FIG. 4, FIG. 5, or FIG. 6, a communication method provided in an embodiment of this application is described in FIG. 8. A terminal device may be any terminal device in the communication system shown in FIG. 4, FIG. 5, or FIG. 6, a network device may be any network device in the communication system shown in FIG. 4, FIG. 5, or FIG. 6, and a core network device may be any core network device in the communication system shown in FIG. 4. The terminal device, the network device, and the core network device in the following embodiments may all have the components shown in FIG. 7. Processing performed by a single execution body (the terminal device, or the network device, or the core network device) shown in embodiments of this application may alternatively be performed by a plurality of execution bodies. These execution bodies may be logically and/or physically separated. This is not limited. The network device in this application may alternatively be replaced with another type of terminal device. When the network device is replaced by the terminal device, in this application, a message obtained by the network device from the core network device may be understood as that the core network device sends the message to the network device, the network device sends the message to the terminal device, and the terminal device sends the message to another terminal device, for example, the another terminal device is triggered to initiate an access procedure.

FIG. 8 shows a communication method according to an embodiment of this application. As shown in FIG. 8, the method may include the following steps.

Step 801: A network device sends first information to a terminal device, and correspondingly, the terminal device receives the first information from the network device.

When a function of a reader is implemented on a terminal device, the terminal device having the function of the reader may send the first information to a terminal device having a function of a tag. In this case, descriptions of the network device in this specification may be replaced with those of the terminal device having the function of the reader. In other words, interaction between the network device and the terminal device may be considered as data interaction between two terminal devices.

The network device may include identification information (for example, first identification information) of an event, a session, a coverage level, or a transaction (for example, a first event, a first session, a first coverage level, or a first transaction) in information (for example, the first information) indicating the terminal device to access a network, to indicate that the information is triggered by the event, the session, the coverage level, or the transaction. The terminal device may respond to the information when the terminal device receives, for the first time, the information (for example, the first information) carrying the identification information of the event, the session, the coverage level, or the transaction. The terminal device may not respond to the information when the terminal device receives again the information carrying the identification information of the event, the session, or the coverage level. In this way, the terminal device is not repeatedly read because the terminal device repeatedly responds to the information triggered by the event, the session, or the coverage level, the terminal device does not repeatedly access the network. This reduces power consumption of the terminal device, and improves a rate of reading the terminal device by the network device.

The following describes, by using an example in which the identification information is the first identification information, the event is the first event, the session is the first session, the coverage level is the first coverage level, and the transaction is the first transaction, a process in which the network device indicates, by using the first information, the terminal device to access the network. A value of the first identification information may be one bit, or may be a plurality of bits.

The first information may indicate the terminal device to access the network, or indicate one or more terminal devices to access the network, or select one or more terminal devices to access the network, or trigger one or more terminal devices to access the network. This is not limited.

The first information may include the first identification information. The first identification information may identify one or more of the following: the first event, the first session, the first coverage level, and the first transaction.

The network device may indicate, by including the first identification information in the first information, that the first information is triggered by the first event, the first session, the first coverage level, or the first transaction. When receiving the first information, the terminal device may access the network based on the first information.

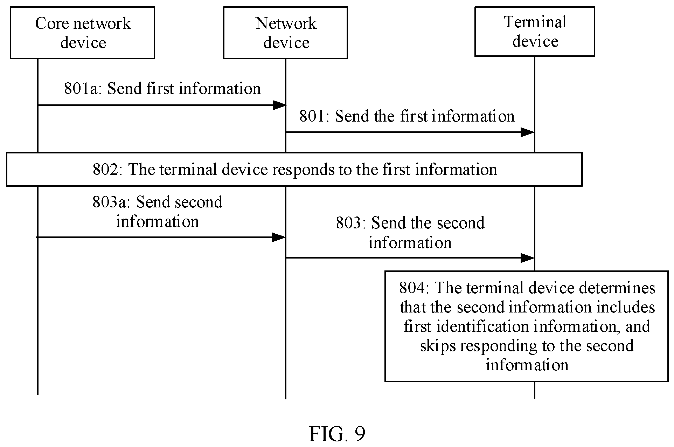

Optionally, the first information may be determined by the network device and sent to the terminal device. Alternatively, as shown in step 801a in FIG. 9, the first information may be determined by a core network device and sent to the network device, and the network device sends, to the terminal device, the first information sent by the core network device.

Optionally, when the first identification information identifies the first event, the first identification information may be an event identifier (event identification, event ID) of the first event. The event identifier may be used by the terminal device, after the terminal device successfully responds to the first information triggered by the event identifier, not to respond again to other information (for example, second information carrying the event identifier) that is triggered by the event identifier and that indicates the terminal device to access the network. In this way, the terminal device is not repeatedly read, power consumption of the terminal device is reduced, and a rate of reading the terminal device by the network device is improved.

For example, the first event may be one or more of the following: an inventory event, a read event, and a write event; or may identify different types of services, for example, services with different quality of service (quality of service, QoS) requirements; or may indicate services triggered by different addresses or different application servers. This is not limited. An event may be replaced with a service or identify a service type.

Optionally, when the first identification information identifies the first session, the first identification information may be a session identifier (session ID) of the first session or a service identifier (service ID), the session identifier or the service identifier may be used by the terminal device, after the terminal device successfully responds to the first information triggered by the session identifier or the service identifier, not to respond again to other information (for example, second information carrying the session identifier or the service identifier) that is triggered by the session identifier or the service identifier and that indicates the terminal device to access the network. In this way, the terminal device is not repeatedly read, power consumption of the terminal device is reduced, and a rate of reading the terminal device by the network device is improved.

After receiving the first information including the first identification information, the terminal device may determine a stored first identification variable, and determine whether the first identification information is the same as the stored first identification variable. If the first identification information is the same as the stored first identification variable, the terminal device does not respond to the first information; or if the first identification information is different from the stored first identification variable, the terminal device may respond to the first information. "Respond" herein indicates that the terminal device accesses the network device or transmits data. Optionally, when the first identification information identifies the first coverage level, the first identification information may be a coverage identifier (coverage ID) of the first coverage level. The coverage identifier may indicate a coverage level of the terminal device, and may be used by the terminal device, after the terminal device successfully responds to the first information triggered by the coverage identifier, not to respond again to information (for example, second information carrying the coverage identifier) triggered by the coverage identifier. Alternatively, the coverage identifier may be used by the terminal device, after the terminal device successfully responds to the first information triggered by the coverage identifier, not to respond to information triggered by another coverage identifier (for example, second information carrying the another coverage identifier). To be specific, when the first information including a same selection condition or identification information of the terminal device (UE ID) is received, if the first coverage level is responded to once, the another coverage identifier and the current coverage identifier may not be responded to.

Optionally, when the first identification information identifies the first transaction, the first identification information indicates a service triggered by the first transaction, a procedure triggered by a first-type service, a service triggered by a first application, or a service triggered by a first address. The network device may send, to the core network device, uplink data that is sent by at least one terminal device and that is triggered based on a transaction identifier (namely, the first identification information) of the first transaction. The network device may further send the first identification information to the core network device.

Optionally, the network device may not send the first identification information on an air interface. After obtaining the first identification information from the core network device, the network device may associate, with the first identification information, a procedure correspondingly triggered by the first identification information. That is, when forwarding, to the core network device, data fed back by the at least one terminal device, the network device may include the first identification information in the data. Alternatively, it may be understood as that a plurality of terminal devices may transmit data through a same transmission channel, and specifically, may transmit the data through a control plane, or may transmit the data through a user plane. This is not limited. The procedure is applicable to a case in which the first identification information identifies the first transaction.

For example, the network device may send, to a mobility management network element (for example, an AMF), the data and the first identification information that are sent by the at least one terminal device. The mobility management network element may forward the data and the first identification information to another core network device, and finally the data and the first identification information is sent to a server.

The another core network device may be a session management network element (for example, an SMF), a network exposure network element (for example, an NEF), or the like.

In another example, the network device may alternatively send, to a user plane network element (for example, a UPF) or a session management network element (for example, an SMF), the data and the first identification information that are sent by the at least one terminal device, and then the session management network element or the user plane network element sends the data and the first identification information to a server.

In the foregoing two examples, the data received by the network device from the at least one terminal device may be data packets included in a plurality of non-access stratum (non-access stratum, NAS) messages, or may be a plurality of user plane data packets. That is, the data is represented as a packet data convergence protocol (packet data convergence protocol, PDCP) data packet or a service data adaptation protocol (service data adaptation protocol, SDAP) data packet on the air interface.

In the foregoing descriptions, the network device may not separately transmit data for each terminal device, to reduce a transmission delay, and does not need to maintain context information of a transmission channel for each user.

In this case, the network device may send one piece of paging signaling or select signaling based on each coverage level, to implement inventory or reading of terminal devices at a plurality of coverage levels. When the terminal device responds to information triggered by one coverage identifier, the terminal device may not respond to information triggered by another coverage identifier, so that the terminal device is not repeatedly read.

Optionally, when the first identification information identifies the first event (or the first session) and the first coverage level, the terminal device may not repeatedly respond to different coverage identifiers of a same event identifier (or a same session identifier), but may repeatedly respond to a same coverage identifier of the same event identifier (or the same session identifier).

Optionally, the first information is broadcast information, multicast information, paging signaling, or select signaling.

The network device may periodically send the broadcast information, the multicast information, the paging signaling, or the select signaling, or the network device may aperiodically send the broadcast information, the multicast information, the paging signaling, or the select signaling. This is not limited.

Optionally, the first information further includes the identification information or mask information of the terminal device.

The network device includes the identification information or the mask information of the terminal device in the first information, to select, for access, the terminal device that matches the identification information or the mask information. If the first information received by the terminal device includes the identification information of the terminal device, the terminal device may access the network based on the first information. Alternatively, if the terminal device determines that the terminal device matches the mask information in the received first information, the terminal device may access the network based on the first information.

The mask information may be included in a NAS message (NAS container), and is obtained by the network device from the core network device. In addition to sending the NAS message including the mask information to the network device, optionally, the core network device further includes a paging indication in an NG-AP (N2) message, to indicate that the NAS message is used to determine a to-be-paged terminal device. Alternatively, the identification information of the terminal device may be obtained by the network device from the core network device. A message that includes a NAS and that is obtained from the core network device may be a paging message or another message. In other words, the paging message between the core network device and the network device includes NAS information. After receiving the information, the network device sends the first information including the NAS information to the terminal device.

Optionally, the first information further includes first configuration information.

The first configuration information may be configuration information of a first timer. The first timer may indicate valid time of the first identification information. Within the valid time, the terminal device may not repeatedly respond to the information that is triggered by the first identification information and that indicates the terminal device to access the network. After the valid time expires, the terminal device may respond again to the information that is triggered by the first identification information and that indicates the terminal device to access the network. Alternatively, after the valid time expires, the terminal device may consider that the terminal device is initialized, and further respond to information that is triggered by the first identification information for the first time and that indicates the terminal device to access the network device. The terminal device may maintain a configuration of the timer for each piece of identification information, that is, the terminal device starts the first timer after successfully completing a service transmission procedure associated with the first identification information.

For example, the terminal device may start the first timer when responding to the first information carrying the first identification information. If the terminal device receives, before the first timer expires, another piece of information (for example, second information carrying the first identification information) that is triggered by the first identification information and that indicates the terminal device to access the network, the terminal device may not respond to the information. If the terminal device receives, after the first timer expires, another piece of information (for example, second information carrying the first identification information) that is triggered by the first identification information and that indicates the terminal device to access the network, the terminal device may respond to the information.

For example, the terminal device may start the first timer after successfully responding to the first information carrying the first identification information. To be specific, after receiving the first information including the first identification information, the terminal device performs an access/data transmission procedure, and then the terminal device may start the first timer after completing the data transmission procedure. Determining that the data transmission procedure is completed may be considering, after first signaling is received, that the data transmission procedure is completed. In other words, the terminal device starts the first timer only after receiving the first signaling. The first signaling may be signaling like QueryRep or Query. If the terminal device receives, before the first timer expires, another piece of information (for example, second information carrying the first identification information) that is triggered by the first identification information and that indicates the terminal device to access the network, the terminal device may not respond to the information. If the terminal device receives, after the first timer expires, another piece of information (for example, second information carrying the first identification information) that is triggered by the first identification information and that indicates the terminal device to access the network, the terminal device may respond to the information.

Optionally, the terminal device may alternatively start the first timer after receiving the first information.

Optionally, when responding to the first information, the terminal device may store (or maintain) the first identification information. After the first timer expires, the terminal device may clear the stored first identification information.

Optionally, the network device may further update the configuration information of the first timer associated with the first identification information.

For example, the network device may include the first identification information and updated configuration information of the first timer in another piece of information that is triggered by the first identification information and that indicates the terminal device to access the network. Alternatively, the network device may separately send the first identification information and an update indication, and updated configuration information of the first timer. The terminal device updates the first timer based on the updated configuration information of the first timer.

Optionally, the network device configures configuration information of the first timer for each piece of first identification information. That is, duration of the first timer corresponding to each piece of first identification information may be different. Alternatively, at least one first identifier may correspond to duration of one first timer.

Optionally, for example, the first identification information is an event identifier. The network device may include the configuration information of the first timer in information that is triggered by each event identifier and that indicates the terminal device to perform access, to indicate valid time of the event identifier. That is, the terminal device may simultaneously maintain a plurality of events, an event identifier of each event, and a first timer associated with each event identifier.

Optionally, when the terminal device determines that a quantity of pieces of identification information (for example, the first identification information) stored by the terminal device is greater than or equal to a first threshold M, the terminal device overwrites an event corresponding to an i^{th} piece of identification information with an event corresponding to an (M+i)^{th} piece of identification information, where i is greater than or equal to 1.

The first threshold may be a maximum value of a quantity of events maintained by the terminal device or a maximum value of a quantity of pieces of first identification information. The first threshold may be determined by the network device, may be determined by the core network device, or may be pre-specified in a protocol. This is not limited.

Step 802: The terminal device responds to the first information, and correspondingly, the network device receives a response of the terminal device to the first information.

Optionally, the network device may further send, to the core network device, the response of the terminal device to the first information.

For example, as shown in FIG. 9, when the first information is determined by the core network device and sent by the network device to the terminal device, the network device may send, to the core network device, the response of the terminal device to the first information.

Optionally, the network device forwards, to the core network device, the response of the terminal device to the first information, or the network device sends, to the core network device, indication information indicating that the terminal device responds to the first information.

For example, the network device sends, to the core network device, the indication information indicating that the terminal device responds to the first information. The indication information may be one bit, or may be a plurality of bits. This is not limited.

For example, the indication information is one bit. The network device may set the one bit to 0 to indicate that the terminal device responds to the first information, or set the one bit to 1 to indicate that the terminal device does not respond to the first information. Alternatively, the network device may set the one bit to 1 to indicate that the terminal device responds to the first information, or set the one bit to 0 to indicate that the terminal device does not respond to the first information.

Optionally, when the network device receives the response of the terminal device to the first information, the network device sends, to the core network device, the indication information indicating that the terminal device responds to the first information. When the network device does not receive (or does not receive within preset duration) the response of the terminal device to the first information, the network device may send, to the core network device, indication information indicating that the terminal device does not respond to the first information, or may not send, to the core network device, indication information indicating that the terminal device does not respond to the first information. This is not limited.

For example, the response of the terminal device to the first information may include a process in which the terminal device performs random access or access based on the first information. The response of the terminal device to the first information may be understood as at least one piece of uplink information sent by the terminal device to the network device in the process in which the terminal device performs random access or access. This is not limited.

After sending the first information to the terminal device, the network device may further send query signaling to the terminal device (or the core network device may further send query signaling to the terminal device via the network device). The query signaling may include an access resource configuration. The terminal device may randomly select an access slot based on the access resource configuration, to perform random access.

Random access may be understood as establishing an association with the network device, and data transmission may be performed after the association is completed.

Optionally, the query signaling may further include flag bit information. The flag bit information may be used to select, for access, a terminal device that matches a flag bit. If there is no flag bit information, the terminal device selected by using the first information may also receive a configuration of the query signaling, and prepare to access the network.

Optionally, the query signaling may alternatively be other signaling that may include the access resource configuration. This is not limited.

For example, when performing random access, the terminal device may send a preamble (preamble) or a random number (for example, an RN 16) to request access. After receiving a message (for example, the random number or an access request message) sent by the terminal device, the network device may return a response message to the terminal device. The response message may be a conflict resolution message, another name (for example, an ACK message), or the like. This is not limited.

The response message may include the random number sent by the terminal device. If the network device does not successfully receive a message (for example, the random number or an access request message) sent by the terminal device, the network device may trigger a terminal device that fails to access the network, to perform access again.

It should be noted that, if the terminal device sends the random number, the random number may be a 16-bit random number (for example, the RN 16), or may be a random number of another length. A quantity of bits of the random number may be included in signaling indicated by the network device to the terminal device, or may be pre-specified in a protocol. If the terminal device sends the preamble, after the network device receives the preamble, the network device may return a response message to the terminal device, and the terminal device sends the random number again for access. A quantity of bits of the random number may be 16 bits or another quantity of bits specified by the network device or specified in a protocol.

After successfully accessing the network (or successfully receiving the response message sent by the network device), the terminal device may perform data transmission with the network device.

Optionally, after the data transmission between the terminal device and the network device is completed, the network device may send an instruction (for example, query response signaling or query signaling) to end a communication procedure of a current terminal device, and trigger a next access slot to arrive, or separately send an instruction to trigger a next slot; or the terminal device may determine a next access slot based on time. After receiving a communication end indication sent by the network device, the terminal device may adjust a first state to one or more of the following: a first inventory state, a second inventory state, an access success state, an access failure state, an idle state, and a connected state.

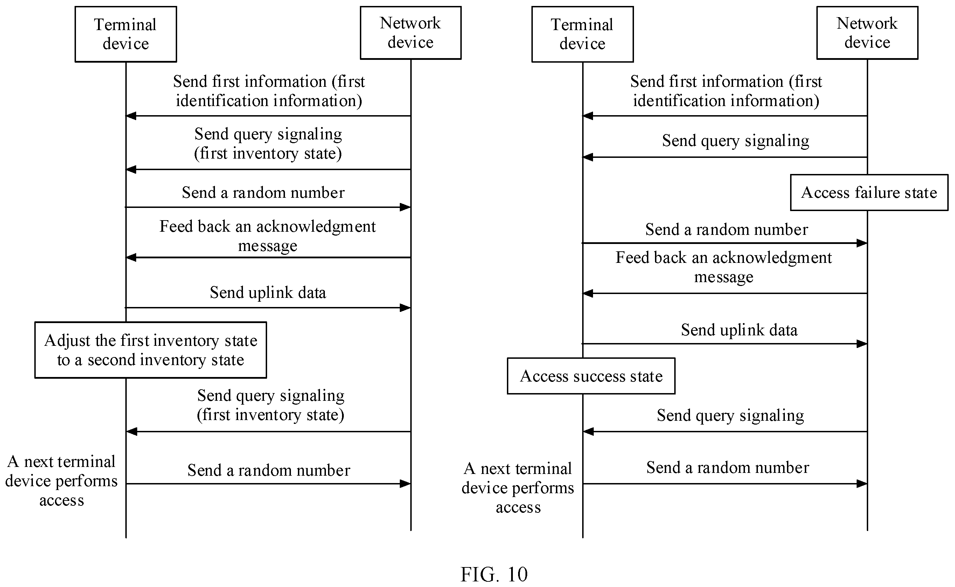

For example, as shown in FIG. 10, the terminal device may adjust the first state from the first inventory state to the second inventory state, or adjust the first state from the second inventory state to the first inventory state, or adjust the first state from the access failure state to the access success state, or adjust the first state from the access success state to the access failure state, or adjust the first state from the idle state to the connected state, or adjust the first state from the connected state to the idle state.

Optionally, after completing random access to the current terminal device, the network device may further trigger a next terminal device to perform random access.

For example, the network device may indicate, by sending signaling like query signaling or query response signaling, a terminal device, that fails to access the network or that does not perform access, to perform random access.

Optionally, the query signaling or the query response signaling includes flag bit information or a first state. This is not limited.

Optionally, when the terminal device receives, for the first time, information that is triggered by the first identification information and that indicates the terminal device to perform access, the terminal device may respond to the information, and adjust the first state or a first flag bit after determining that data transmission is completed. When the terminal device receives again the information that is triggered by the first identification information and that indicates the terminal device to perform access, the terminal device may not respond to the information. Optionally, the first state or the first flag bit may not be adjusted. Data transmission completion may be determined by the terminal device based on a data transmission status. For example, if a buffer is 0, the terminal device may determine that data transmission is completed. Alternatively, the terminal device may perform determining based on received signaling. This is not limited. The first flag bit may alternatively be represented as first information or a first value.

Alternatively, when the information that is triggered by the first identification information and that indicates the terminal device to perform access carries the configuration information of the first timer, before the first timer expires, if the terminal device receives again the information that is triggered by the first identification information and that indicates the terminal device to perform access, the terminal device may not respond to the information or may not adjust the first state or the first flag bit.

In addition, in consideration of a case in which overlapping coverage exists between network devices, to avoid a case in which the terminal device cannot be read due to the fact that a plurality of network devices use same identification information (for example, the first identification information) without negotiation to identify different events/sessions/coverage levels, the network device may send first indication information to the terminal device when performing initial inventory on the terminal device, to indicate the terminal device to clear stored identification information (for example, the first identification information) Alternatively, the network device may send first indication information when the network device needs to repeatedly perform inventory on a terminal device for an event, for a session, or at a coverage level. The terminal device clears the stored identification information (for example, the first identification information) based on the first indication information, to avoid the case in which the terminal device cannot be read due to the fact that the plurality of network devices use the same identification information. The scenario herein is merely an example. During actual application, the network device may independently determine whether to send the first indication information.

Optionally, the network device may alternatively send the first indication information to the terminal device, to initialize the identification information that is stored and responded to by the terminal device. To be specific, when the terminal device receives, again after initialization, the first information including the first identification information, it may be considered that the first identification information is received for the first time.

Optionally, when the terminal device starts the first timer after responding to an event, a session, or a coverage level, that is, maintains maximum valid time of the event, the session, or the coverage level, if the terminal device receives, before the first timer expires, the first indication information sent by the network device, the terminal device may clear the stored identification information, and stop the first timer.

Optionally, the network device may alternatively allocate first indication information to each event/session/coverage level, to indicate the terminal device to clear identification information maintained for an event/session/coverage level.

For example, the first indication information may include the first identification information. The terminal device may clear the stored first identification information based on the first identification information.

For example, the first indication information indicates to perform initialization on a piece of first identification information. The to-be-initialized piece of identification information may be indicated by indicating an index of the piece of identification information or by using a bitmap.

When the first information includes the first indication information and the first identification information, the terminal device may first initialize stored identification information or clear identification information that is stored and responded to, and then respond to the first identification information included in the first information.

Step 803: The network device sends second information to the terminal device, and the terminal device receives the second information from the network device.

The second information may indicate the terminal device to access a network.

For example, the second information may be broadcast information, multicast information, paging signaling, or select signaling.

The second information may be information that is triggered by the first identification information and that indicates the terminal device to access the network device, or may be information that is triggered by other identification information and that indicates the terminal device to access the network. This is not limited.

Optionally, the second information may be determined by the network device and sent to the terminal device. Alternatively, as shown in step 803a in FIG. 9, the second information may be determined by a core network device and sent to the network device, and the network device sends, to the terminal device, the second information sent by the core network device.

Step 804: The terminal device determines that the second information includes the first identification information, and skips responding to the second information, and correspondingly, the network device receives no response of the terminal device to the second information.

When the terminal device has responded to the first information including the first identification information, if the second information received by the terminal device includes the first identification information, the terminal device may not respond to the second information. This prevents the terminal device from being repeatedly read, reduces power consumption of the terminal device, and improves a rate of reading the terminal device by the network device.

Optionally, if the terminal device starts the first timer after responding to the first event, the first session, the first coverage level, or the first transaction, if the terminal device receives, before the first timer expires, the second information including the first identification information, the terminal device may not respond to the second information. If the terminal device receives, after the first timer expires, the second information including the first identification information, the terminal device may respond to the second information.

Optionally, if the second information includes the first identification information, the second information may further include second configuration information. The second configuration information may be the configuration information of the first timer. The terminal device may update the configuration information of the first timer based on the second configuration information.

Optionally, if the second information received by the terminal device does not include the first identification information, the terminal device may respond to the second information.

According to the method shown in FIG. 8, the first identification information is carried in the information (for example, the first information or the second information) indicating the terminal device to access the network, to indicate that the information is triggered by the first event, the first session, the first coverage level, or the first transaction. When the terminal device receives, for the first time, the information (for example, the first information) carrying the first identification information, the terminal device may respond to the information. When the terminal device receives again the information (for example, the second information) carrying the first identification information, the terminal device may not respond again to the information. In this way, when inventory performed on terminal devices at a plurality of coverage levels is implemented, the terminal devices are not repeatedly read, power consumption of the terminal devices is reduced, and an inventory rate is improved.

Optionally, according to the method shown in FIG. 8, the first identification information sent by the network device to the terminal device may be determined by the network device, or may be determined by the core network device and sent to the network device.

The core network device may send, to the network device, one or more of the following: the first information, the second information, the first indication information, the configuration information of the first timer, a first identifier, configuration information of a second timer, and some or all information (for example, the mask information or the NAS information) included in the first information. The first information may include the first identification information. For descriptions of the first information, refer to the descriptions of the first information in FIG. 8. Details are not described again. A message sent by the core network device to the network device may be a paging message or another NG-AP message.

If the first identification information is determined by the network device, each network device may determine first identification information for specific paging. If different network devices do not negotiate with each other, same first identification information may identify different events/sessions/coverage levels, and consequently, the terminal device cannot be read. In this case, when using the first identification information for the first time, the network device may send the first indication information to the terminal device, to avoid a case in which the terminal device cannot respond to the first information that carries the first identification information and that is sent by the current network device because the terminal device previously receives the first information that carries the first identification information and that is sent by another network device. That is, the network device determines the first identification information, to prevent, in a small area (for example, a coverage area of the network device), the terminal device from being repeatedly read.

If the first identification information is determined by the core network device, the core network device may set same identification information for a same event/session/coverage level in a plurality of connected network devices or cells, to ensure that the terminal device cannot be repeatedly read when the terminal device moves in a large area (for example, a coverage area of the core network device).

Further, the terminal device may still be repeatedly read if the terminal device moves at a boundary between two core network devices, or moves in an overlapping area between network devices connected to two core network devices, or moves in an overlapping area between two large areas. In this case, the core network device may further send area identification information to the terminal device through the network device, so that the terminal device still cannot be repeatedly read when the terminal device moves in a larger area, for example, moves in coverage areas of different core network devices.

Optionally, the core network device may include the area identification information in the first information, and send the area identification information to the terminal device through the network device.

The area identification information may indicate one or more areas associated with the first identification information, and the first identification information is valid in the area indicated by the area identification information.

For example, the area identification information includes one or more of the following: identification information of one or more areas, identification information of one or more core network devices, and identification information of one or more public land mobile networks (public land mobile networks, PLMNs).

The core network device may send the identification information of the one or more areas/core network devices/PLMNs to the terminal device through the network device in a list form. To be specific, the core network device may send an area/core network device/PLMN list to the terminal device through the network device, where the area/core network device/PLMN list may include the identification information of the one or more areas/core network devices/PLMNs.

After the terminal device receives the area identification information and completes the response to the first information, the terminal device may store the area identification information and the first identification information. When the terminal device moves in an area corresponding to an area identifier associated with the first identification information, if the information (for example, the second information) that is triggered by the first identification information associated with the area identification information and that indicates the terminal device to access the network device is still received, the terminal device may not respond to the information. If the area identifier included in a cell to which the terminal device moves is different from a previously received area identifier, the terminal device may respond to a communication procedure triggered by same first identification information associated with different area identifiers, for example, a paging procedure, an access procedure, or a data transmission procedure.

Optionally, the foregoing embodiment may alternatively be combined with a cell selection/reselection solution. After the terminal device selects, according to the cell selection/reselection solution, a cell to camp on, the terminal device may respond only to signaling in the current cell. If received signaling belongs to another cell, the terminal device does not respond to the signaling. The terminal device may respond to signaling of another cell only if the terminal device is handed over to the another cell. In this way, the terminal device cannot be repeatedly read between cells. To be specific, after camping on a cell, the terminal device may respond only to signaling in the cell, and record first identification information indicating a successful response or transmission completion. After the terminal device moves or selects another cell, if the cell also sends paging of a same event/session/coverage level, the terminal device may still not make a response. Specifically, received downlink signaling in the camped cell may be scrambled by using a cell ID of the cell. A specific broadcast message or a message or a sequence including a cell ID may not be scrambled by using the cell ID.

Optionally, the network device may further determine the configuration information of the second timer, and send the configuration information of the second timer to the terminal device; or the core network device determines the configuration information of the second timer, and sends the configuration information of the second timer to the terminal device through the network device.

The terminal device may start the second timer when determining that data transmission is completed or communication ends. Before the second timer expires, the terminal device skips receiving downlink information (or the terminal device enters a sleep state), to prevent the terminal device from being repeatedly read within valid time of the second timer. In this simple manner, the first identification information does not need to be stored, and the manner is more applicable to a terminal device (for example, a passive tag) that is difficult to store information. The terminal device may determine, based on a piece of signaling, that data transmission is completed or communication ends; or may determine, based on a case in which an uplink data buffer is 0, that data transmission is completed or communication ends; or may determine, based on a case in which no uplink or downlink data is transmitted within a period of time, that data transmission is completed or communication ends.

Optionally, the core network device or the network device includes the configuration information of the second timer in paging signaling or select signaling, and sends the configuration information of the second timer to the terminal device.

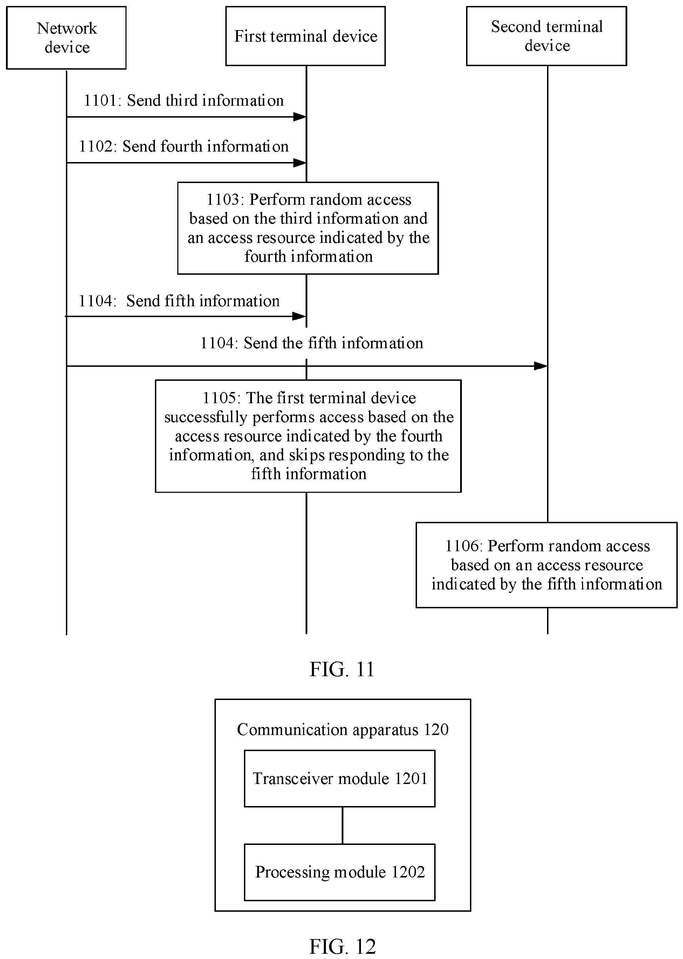

A difference from that the network device includes the first identification information in the first information or the second information to prevent the terminal device from being repeatedly read lies in that, as shown in FIG. 11, the network device may first page all terminal devices by using a maximum coverage level, and then sequentially trigger, by using different coverage levels, the terminal devices to access the network, and a terminal device that has responded to a coverage level may not perform access again. This prevents the terminal devices at different coverage levels from being repeatedly read, and reduces network resource (for example, spectrum utilization) overheads.

FIG. 11 shows a communication method according to an embodiment of this application. As shown in FIG. 11, the method may include the following steps.

Step 1101: A network device sends third information to a first terminal device, and correspondingly, the first terminal device receives the third information from the network device.

The third information may be used to select one or more terminal devices to access a network. The third information may be associated with a second coverage level. The one or more terminal devices may include the first terminal device.

For example, the third information may be one or more of the following: paging signaling, select signaling, and query signaling.

The network device may send the third information to the terminal device at a maximum coverage level (for example, the second coverage level), to page a terminal device in a coverage area corresponding to the maximum coverage level. When receiving the third information, the terminal device in the coverage area corresponding to the maximum coverage level may wait to access the network.

The maximum coverage level may also be described as a highest coverage level or a worst coverage level.

That the third information is sent at the maximum coverage level means that during bottom-layer transmission, the third information is sent by using a transmission parameter corresponding to the maximum coverage level. For example, the transmission parameter may be a maximum repetition count, a lowest modulation order of a modulation and coding scheme, a minimum transmission bandwidth, a maximum transmission power, and the like of a chip (chip)/a symbol/a bit/a block/information. This is not limited.

Step 1102: The network device sends fourth information to the first terminal device, and correspondingly, the first terminal device receives the fourth information from the network device.

The fourth information may indicate an access resource. The fourth information may be associated with a third coverage level. A coverage area corresponding to the third coverage level may be less than a coverage area corresponding to a second coverage level, in other words, the third coverage level is less than or lower than a second coverage level, or signal strength of a signal received by a terminal device in a coverage area corresponding to the third coverage level is greater than signal strength of a signal received by a terminal device in an edge area of a coverage area corresponding to a second coverage level.

The signal strength may be represented by parameters such as a reference signal received power (reference signal received power, RSRP) and reference signal received quality (reference signal received quality, RSRQ).

Optionally, the second coverage level is associated with a first transmission parameter, and the third coverage level is associated with a second transmission parameter.

The first transmission parameter includes one or more of the following: a first repetition count, a first modulation and coding scheme, a first transmission bandwidth, and a first transmission power of a chip (chip)/a symbol/a bit/a block/information. The second transmission parameter includes one or more of the following: a second repetition count, a second modulation and coding scheme, a second transmission bandwidth, and a second transmission power of a bit/a block/information.

Optionally, the first repetition count is greater than the second repetition count; or a modulation order of the first modulation and coding scheme is lower than that of the second modulation and coding scheme; or the first transmission bandwidth is less than the second transmission bandwidth; or the first transmission power is greater than the second transmission power.

For example, the fourth information may be query signaling or other signaling that may indicate the access resource. This is not limited.

The network device may send the fourth information to the terminal device at a minimum coverage level (for example, the third coverage level), so that a terminal device in a coverage area corresponding to the minimum coverage level accesses the network based on the access resource indicated by the fourth information.

The minimum coverage level may also be described as a lowest coverage level or a best coverage level.

That the fourth information is sent at the minimum coverage level means that during bottom-layer transmission, the fourth information is sent by using a transmission parameter (for example, the second transmission parameter) corresponding to the minimum coverage level. For example, the transmission parameter may be a minimum repetition count, a highest modulation order of a modulation and coding scheme, a maximum transmission bandwidth, a minimum transmission power, and the like of a chip (chip)/a symbol/a bit/a block/information. This is not limited.

Optionally, before the network device sends the fourth information, some terminal devices may access the network after receiving the third information, and perform data transmission.

For example, if a time interval between receiving the third information and receiving the fourth information by the terminal device is specified in a protocol, if the terminal device does not receive the fourth information after the time interval is exceeded, the terminal device may be restored to an initial state, a non-paged state, or another state. In this case, a possible implementation of the network device is as follows: After sending the third information, the network device may send the fourth information at the worst coverage level to trigger the terminal device to perform access. In this way, all terminal devices in a worst coverage area receive the third information and the fourth information, and a terminal device that fails to access the network may wait for access in a subsequent access opportunity. In a subsequent procedure, the foregoing description of sending the fourth information at the best coverage level is repeated, then signaling is sent at an incremental coverage level, and finally the signaling is sent at the worst coverage level to which a coverage level is increased. It should be noted that at least one piece of fourth information or information for triggering the terminal device to perform access is sent at each coverage level. Herein, an implementation behavior of the network device may not be limited by a described scenario. The network device may implement the implementation according to the foregoing method. To be specific, the network device first sends the third information and the fourth information by using a transmission parameter corresponding to a worst coverage level (a largest coverage area), then sends the fourth information at the best coverage level, and sends signaling at an incremental coverage level, until a coverage level is increased to the worst coverage level, to send the fifth information or other information by using the transmission parameter corresponding to the worst coverage level.

In this application, only an example in which a corresponding coverage level for sending downlink signaling is used for description. This application may also be applicable to uplink data transmission. For example, the downlink signaling indicates a transmission parameter that corresponds to a specific coverage level and that is used in uplink. Transmission parameters that correspond to coverage levels and that are used for uplink transmission and associated downlink transmission may be the same or different.

Step 1103: The first terminal device performs random access based on the third information and the access resource indicated by the fourth information, or the first terminal device sends a response to the fourth information to the network device; and correspondingly, the network device receives the response of the first terminal device to the fourth information.

The first terminal device may be any terminal device in the coverage area corresponding to the minimum coverage level.

In step 1102 and step 1103, only the terminal device in the coverage area corresponding to the third coverage level can receive the fourth information, perform random access based on the access resource indicated by the fourth information, and complete data transmission.

Step 1104: The network device sends fifth information, and correspondingly, both the first terminal device and a second terminal device may receive the fifth information from the network device.

Step 1105: The first terminal device successfully performs access based on the access resource indicated by the fourth information, and skips responding to the fifth information, and correspondingly, the network device receives no response of the first terminal device to the fifth information.

Step 1106: The second terminal device performs random access based on the third information and an access resource indicated by the fifth information, or the second terminal device sends a response to the fifth information to the network device; and correspondingly, the network device receives the response of the second terminal device to the fifth information.

The fifth information may indicate the access resource.

The fourth information and the fifth information may be a same piece of signaling, and have a same name.

Optionally, the fifth information is associated with the second coverage level.

After the terminal device in the coverage area corresponding to the minimum coverage level completes access or data transmission, the network device may send query signaling or new trigger signaling (for example, the fifth information) by using a transmission parameter of an increased coverage level (for example, the first transmission parameter of the second coverage level), to indicate a terminal device (for example, the second terminal device) that is paged and that has not completed data transmission to access the network. In this case, a terminal device that has not accessed the network in the coverage area corresponding to the second coverage level may perform random access, and complete data transmission.

The terminal device in the coverage area corresponding to the second coverage level may include the first terminal device and the second terminal device. Because the first terminal device has accessed the network based on the fourth information associated with the third coverage level, when the first terminal device receives the fifth information, the first terminal device may not respond to the fifth information, to prevent the first terminal device from being repeatedly read. Because the second terminal device does not access the network, when receiving the fifth information, the second terminal device may perform random access based on the fifth information.

Optionally, the first terminal device may not respond to the received fifth information when the first terminal device determines that the first terminal device successfully performs access based on the access resource indicated by the fourth information, and determines that data transmission is completed or communication ends.

For example, coverage levels sequentially include a coverage level 1 and a coverage level 2 in ascending order. When sending the fourth information, the network device may send the fourth information at the coverage level 1 (the minimum coverage level), and trigger a terminal device at the coverage level 1 to access the network and complete data transmission. When the terminal device at the coverage level 1 completes data transmission, the terminal device does not respond to other query signaling or access triggering signaling (for example, the fifth information) in the third information. Then, the network device triggers, by using a transmission parameter at the coverage level 2, the terminal device at the coverage level 2 to access the network and complete data transmission.

Optionally, if the terminal device supports a flag bit, the fourth information may include a first flag bit.

When receiving the fourth information, the first terminal device may determine whether a flag bit of the first terminal device is the first flag bit included in the fourth information. If determining that the flag bit of the first terminal device is the first flag bit, the first terminal device may perform random access based on the access resource indicated by the fourth information. When determining that the first terminal device successfully performs access, the first terminal device may adjust the first flag bit to a second flag bit (that is, flag bit flipping). Subsequently, when the network device selects the terminal device with the first flag bit for access, the first terminal device may not make a response, to avoid repeated reading. When determining that the flag bit of the first terminal device is the second flag bit, the first terminal device may not respond to the fourth information, that is, the first terminal device does not access the network based on the access resource indicated by the fourth information.

Optionally, if the terminal device supports a flag bit, the fifth information may include a first flag bit.

When receiving the fifth information, the first terminal device may determine whether a flag bit of the first terminal device is the first flag bit included in the fifth information. If determining that the flag bit of the first terminal device is the first flag bit, the first terminal device may perform random access based on the access resource indicated by the fifth information. When determining that the first terminal device successfully performs access, the first terminal device may adjust the first flag bit to a second flag bit (that is, flag bit flipping). Subsequently, when the network device selects the terminal device with the first flag bit for access, the first terminal device may not make a response, to avoid repeated reading. When determining that the flag bit of the first terminal device is the second flag bit, the first terminal device may not respond to the fifth information, that is, the first terminal device does not access the network based on the access resource indicated by the fifth information.

When receiving the fifth information, the second terminal device may determine whether a flag bit of the second terminal device is the first flag bit included in the fifth information. If determining that the flag bit of the second terminal device is the first flag bit, the second terminal device may perform random access based on the access resource indicated by the fifth information. When determining that the second terminal device successfully performs access, the second terminal device may adjust the first flag bit to a second flag bit (that is, flag bit flipping). Subsequently, when the network device selects the terminal device with the first flag bit for access, the second terminal device may not make a response, to avoid repeated reading. When determining that the flag bit of the second terminal device is the second flag bit, the second terminal device may not respond to the fifth information, that is, the second terminal device does not access the network based on the access resource indicated by the fifth information.

For example, if the terminal device supports a flag bit, when the network device sends the fourth information at the third coverage level, the network device may include a flag bit A, to indicate a terminal device whose flag bit is A to perform access. After the terminal device (for example, the first terminal device) that can receive the fourth information sent at the third coverage level completes data transmission, the flag bit is changed to B. When the network device subsequently sends the fifth information at the second coverage level, the flag bit A is included. Both the first terminal device at the third coverage level and the second terminal device at the second coverage level can receive the fifth information, but the first terminal device at the third coverage level has changed the flag bit to B, and therefore does not respond to other trigger access signaling (for example, the fifth information) at the second coverage level. In other words, only the second terminal device at the second coverage level responds to the fifth information at the second coverage level. In this way, terminal devices at different coverage levels are not repeatedly read.

For example, the first flag bit and the second flag bit may alternatively be represented in other forms, for example, a first value and a second value, first flag bit information and second flag bit information, a first flag bit state and a second flag bit state, and a first mode and a second mode, a first inventory state, a second inventory state, or the like.

Similarly to the foregoing case in which coverage levels includes the second coverage level and the third coverage level, a fourth coverage level may be further included between the second coverage level and the third coverage level.

A coverage area corresponding to the fourth coverage level may be less than the coverage area corresponding to the second coverage level, and the coverage area corresponding to the fourth coverage level may be greater than the coverage area corresponding to the third coverage level.

Optionally, the fourth coverage level is associated with a third transmission parameter. The third transmission parameter includes one or more of the following: a third repetition count, a third modulation and coding scheme, a third transmission bandwidth, and a third transmission power of a chip (chip)/a symbol/a bit/a block/information.

Optionally, the first repetition count is greater than the third repetition count, and the third repetition count is greater than the second repetition count; or the modulation order of the first modulation and coding scheme is lower than that of the third modulation and coding scheme, and the modulation order of the third modulation and coding scheme is lower than that of the second modulation and coding scheme; or the first transmission bandwidth is less than the third transmission bandwidth, and the third transmission bandwidth is less than the second transmission bandwidth; or the first transmission power is greater than the third transmission power, and the third transmission power is greater than the second transmission power.

Optionally, the network device may first send the fourth information at the third coverage level, then send sixth information at the fourth coverage level, and send the fifth information at the second coverage level.

The sixth information may indicate an access resource, and the sixth information is associated with the fourth coverage level.

Terminal devices in the coverage area corresponding to the fourth coverage level may include the first terminal device and a third terminal device, and terminal devices in the coverage area corresponding to the second coverage level may include the first terminal device, the third terminal device, and the second terminal device. That is, the first terminal device may sequentially receive the fourth information, the sixth information, and the fifth information that are sent by the network device. The third terminal device may sequentially receive the sixth information and the fifth information that are sent by the network device.

For processing performed by the first terminal device on the sixth information, refer to the foregoing processing performed by the first terminal device on the fifth information. For processing performed by the third terminal device on the fifth information, refer to the foregoing processing performed by the first terminal device on the fifth information. Details are not described again.

For example, coverage levels sequentially include a coverage level 1, a coverage level 2, and a coverage level 3 in ascending order. When sending the fourth information, the network device may send the fourth information at the coverage level 1 (the minimum coverage level), and trigger a terminal device at the coverage level 1 to access the network and complete data transmission. When the terminal device at the coverage level 1 completes data transmission, the terminal device does not respond to other query signaling or access trigger signaling (for example, the fifth information and the sixth information) in the third information. Then, the network device triggers, by using the sixth information at the coverage level 2, the terminal device at the coverage level 2 to access the network and complete data transmission. When completing data transmission, the terminal device at the coverage level 2 does not respond to other query signaling or access trigger signaling (for example, the fifth information) in the third information. Then, the network device triggers, by using the fifth information at the coverage level 3, the terminal device at the coverage level 3 to access the network and complete data transmission.

Optionally, if the terminal device supports a flag bit, the sixth information may include a first flag bit.

When receiving the sixth information, the first terminal device (or the second terminal device or the third terminal device) may determine whether a flag bit of the first terminal device is the first flag bit included in the sixth information. If determining that the flag bit of the first terminal device is the first flag bit, the first terminal device may perform random access based on the access resource indicated by the sixth information. When determining that the first terminal device successfully performs access, the first terminal device may adjust the first flag bit to a second flag bit (that is, flag bit flipping). Subsequently, when the network device selects the terminal device with the first flag bit for access, the first terminal device may not make a response, to avoid repeated reading. When determining that the flag bit of the first terminal device is the second flag bit, the first terminal device may not respond to the sixth information, that is, the first terminal device does not access the network based on the access resource indicated by the sixth information.

Optionally, if the terminal device does not support the flag bit, the terminal device may perform differentiation by supporting different states (for example, an access success state, an access failure state, a connected state, and an idle state), or the terminal device perform differentiation during internal implementation to respond to the access trigger signaling in the third information and access the network, and then does not perform an access process again.

According to the method shown in FIG. 11, after the network device pages all the terminal devices by using the maximum coverage level, when the terminal device waits for access, the network device may first trigger access of the terminal device in a bottom-layer enhancement manner of a good coverage level. When access of the terminal device at the good coverage level is completed, access of the terminal device is triggered in a bottom-layer enhancement manner of a poor coverage level, and a terminal device that has responded to a coverage level may not perform access again. This prevents terminal devices at different coverage levels from being repeatedly read, and reduces network resource (for example, spectrum utilization) overheads. The method is applicable to a scenario in which the terminal device does not support downlink measurement, or the terminal device cannot determine a coverage level or a coverage status of the terminal device.

A difference from the method shown in FIG. 11 lies in that the terminal device may alternatively respond to downlink information when a coverage level of the terminal device is the same as a coverage level of the received downlink information. In this way, the terminal devices at different coverage levels are not repeatedly read.

The network device may send downlink information to the terminal device, and the terminal device determines the coverage level of the terminal device based on signal strength of the downlink information. When the coverage level of the terminal device is equal to the coverage level of the downlink information, the terminal device responds to the downlink information.

The downlink information may be transmitted at a fifth coverage level.

For example, the network device may indicate threshold information of a coverage level to the terminal device. The terminal device determines a coverage level of the terminal device based on a comparison result between signal strength of a downlink signal and the threshold information.

The threshold information may include one or more thresholds. The threshold may be an RSRP threshold.

One threshold may be used to determine two coverage levels. For example, if the signal strength of the downlink signal is greater than the threshold, it may be determined that the coverage level of the terminal device is a better coverage level in the two coverage levels. If the signal strength of the downlink signal is less than the threshold, it may be determined that the coverage level of the terminal device is a worse coverage level in the two coverage levels.

If a measurement result is less than the threshold, the terminal device belongs to a bad coverage level or the second coverage level.

Similarly, N+1 coverage levels may be determined based on N thresholds.

Optionally, after responding to the downlink information, the terminal device may further adjust a first state to one or more of the following: a first inventory state, a second inventory state, an access success state, an access failure state, an idle state, and a connected state.

For descriptions of the first state, refer to the related descriptions of the first state in FIG. 8. Details are not described again.

According to the foregoing method, because the terminal device may determine the coverage level of the terminal device, when the network device sends the downlink information (for example, the paging signaling or the select signaling), a coverage level corresponding to the sent downlink information may be explicitly or implicitly indicated. The terminal device may make a response based on the coverage level determined by the terminal device, and the terminal device may respond to the downlink information when the coverage level corresponding to the downlink information is the same as the coverage level of the terminal device. This prevents terminal devices at different coverage levels from being repeatedly read during paging of a same event. The method is applicable to a scenario in which the terminal device supports downlink measurement, or the terminal device can determine a coverage level or a coverage status of the terminal device.

It should be noted that the methods provided in embodiments of this application may be implemented separately, or may be implemented in combination. This is not limited.

It may be understood that an execution body may perform some or all of the steps in embodiments of this application. The steps or operations are merely examples. Embodiments of this application may further include performing other operations or variations of various operations. In addition, the steps may be performed in a sequence different from a sequence presented in embodiments of this application, and not all the operations in embodiments of this application may be performed.

The solutions provided in embodiments of this application are mainly described above from a perspective of interaction between the devices. It may be understood that, to implement the foregoing functions, each device includes a corresponding hardware structure and/or a corresponding software module for performing each function. A person of ordinary skill in the art should easily be aware that, in combination with algorithms and steps in the examples described in embodiments disclosed in this specification, this application can be implemented by hardware or a combination of hardware and computer software. Whether a function is executed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the devices may be divided into functional modules based on the foregoing method examples. For example, each functional module may be obtained through division based on each corresponding function, or two or more functions may be integrated into one processing module. The integrated module may be implemented in a form of hardware, or may be implemented in a form of software functional module. It should be noted that, in embodiments of this application, module division is an example, and is merely logical function division. During actual implementation, another division manner may be used.

When each functional module is obtained through division based on each corresponding function, FIG. 12 shows a communication apparatus 120. The communication apparatus 120 may perform the actions performed by the terminal device in FIG. 8 to FIG. 11, or perform the actions performed by the network device in FIG. 8 to FIG. 11, or perform the actions performed by the core network device in FIG. 8 to FIG. 11, or perform the actions performed by the first terminal device in FIG. 8 to FIG. 11, or perform the actions performed by the second terminal device in FIG. 8 to FIG. 11, or perform the actions performed by the third terminal device in FIG. 8 to FIG. 11. This is not limited.

The communication apparatus 120 may include a transceiver module 1201 and a processing module 1202. For example, the communication apparatus 120 may be a communication apparatus, or may be a chip used in the communication apparatus, or another combined device or component that has a function of the foregoing communication apparatus. When the communication apparatus 120 is the communication apparatus, the transceiver module 1201 may be a transceiver. The transceiver may include an antenna, a radio frequency circuit, and the like. The processing module 1202 may be a processor (or a processing circuit), for example, a baseband processor. The baseband processor may include one or more CPUs. When the communication apparatus 120 is the component that has the function of the foregoing communication apparatus, the transceiver module 1201 may be a radio frequency unit; and the processing module 1202 may be a processor (or a processing circuit), for example, a baseband processor. When the communication apparatus 120 is a chip system, the transceiver module 1201 may be an input/output interface of a chip (for example, a baseband chip), and the processing module 1202 may be a processor (or a processing circuit) of the chip system, and may include one or more central processing units. It should be understood that the transceiver module 1201 in this embodiment of this application may be implemented by the transceiver or a transceiver-related circuit component; and the processing module 1202 may be implemented by the processor or a processor-related circuit component (or referred to as the processing circuit).

For example, the transceiver module 1201 may be configured to perform all receiving and sending operations performed by the communication apparatus in the embodiments shown in FIG. 8 to FIG. 11, and/or configured to support another process of the technology described in this specification. The processing module 1202 may be configured to perform all operations other than the receiving and sending operations performed by the communication apparatus in the embodiments shown in FIG. 8 to FIG. 11, and/or configured to support another process of the technology described in this specification.

In another possible implementation, the transceiver module 1201 in FIG. 12 may be replaced with a transceiver, and a function of the transceiver module 1201 may be integrated into the transceiver. The processing module 1202 may be replaced with a processor, and a function of the processing module 1202 may be integrated into the processor. Further, the communication apparatus 120 shown in FIG. 12 may further include a memory.

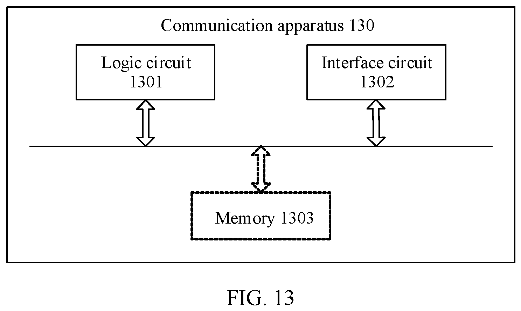

Alternatively, when the processing module 1202 is replaced with a processor, and the transceiver module 1201 is replaced with a transceiver, the communication apparatus 120 in this embodiment of this application may be a communication apparatus 130 shown in FIG. 13. The processor may be a logic circuit 1301, and the transceiver may be an interface circuit 1302. Further, the communication apparatus 130 shown in FIG. 13 may further include a memory 1303.

An embodiment of this application further provides a computer program product. When the computer program product is executed by a computer, a function of any one of the foregoing method embodiments may be implemented.

An embodiment of this application further provides a computer program. When the computer program is executed by a computer, a function of any one of the foregoing method embodiments may be implemented.

An embodiment of this application further provides a computer-readable storage medium. All or some of procedures in the foregoing method embodiments may be implemented by a computer program instructing related hardware. The program may be stored in the foregoing computer-readable storage medium. When the program is executed, the procedures in the foregoing method embodiments may be performed. The computer-readable storage medium may be an internal storage unit in the terminal in any one of the foregoing embodiments (including a data transmitter and/or a data receiver), for example, a hard disk or memory of the terminal. The foregoing computer-readable storage medium may alternatively be an external storage device of the foregoing terminal, for example, a plug-in hard disk drive, a smart media card (smart media card, SMC), a secure digital (secure digital, SD) card, and a flash card (flash card) that are configured on the foregoing terminal. Further, the computer-readable storage medium may further include both an internal storage unit and an external storage device of the foregoing terminal. The computer-readable storage medium is configured to store the computer program and other programs and data required by the foregoing terminal. The computer-readable storage medium may be further configured to temporarily store data that has been output or is to be output.

It should be noted that, in the specification, claims, and accompanying drawings of this application, the terms "first", "second", and the like are intended to distinguish between different objects but do not indicate a particular order. In addition, the terms "include" and "have" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" usually indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural.

The foregoing descriptions about implementations allow a person skilled in the art to clearly understand that, for the purpose of convenient and brief description, division of the foregoing functional modules is taken as an example for illustration. During actual application, the foregoing functions may be allocated to different functional modules for implementation based on a requirement, in other words, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, the module or unit division is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on an actual requirement to achieve the objectives of the solutions in embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of software functional unit.

When the integrated unit is implemented in the form of software functional unit and sold or used as an independent product, the integrated unit may be stored in a readable storage medium. Based on such understanding, the technical solutions of this application essentially or all or some of the technical solutions may be implemented in the form of software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, for example, a USB flash drive, a removable hard disk, a ROM, a RAM, a magnetic disk, or an optical disc.

## Claims

1. A communication method, comprising:
receiving, by a terminal device, first information from a network device, wherein the first information indicates the terminal device to access a network, the first information comprises first identification information, and the first identification information identifies one or more of the following: a first event, a first session, and a first coverage level;
responding, by the terminal device, to the first information;
receiving, by the terminal device, second information from the network device, wherein the second information indicates the terminal device to access a network; and
determining that the second information comprises the first identification information, and skipping, by the terminal device, responding to the second information.

2. The method according to claim 1, wherein
the first information is broadcast information, multicast information, paging signaling, or select signaling; and/or
the second information is broadcast information, multicast information, paging signaling, or select signaling.

3. The method according to claim 1 or 2, wherein the determining that the second information comprises the first identification information, and skipping, by the terminal device, responding to the second information comprises:
the first information further comprises first configuration information, wherein the first configuration information is configuration information of a first timer; and
determining, by the terminal device, that the first timer does not expire, and skipping, by the terminal device, responding to the second information.

4. The method according to any one of claims 1 to 3, wherein the method further comprises:
storing, by the terminal device, the first identification information; and
determining, by the terminal device, that a quantity of pieces of identification information stored by the terminal device is greater than or equal to a first threshold M, and overwriting, by the terminal device, an event corresponding to an i^{th} piece of identification information with an event corresponding to an (M+i)^{th} piece of identification information, wherein i is greater than or equal to 1.

5. The method according to any one of claims 1 to 4, wherein after the responding, by the terminal device, to the first information, the method further comprises:
adjusting, by the terminal device, a first state to one or more of the following: a first inventory state, a second inventory state, an access success state, an access failure state, an idle state, and a connected state.

6. The method according to any one of claims 1 to 5, wherein the method further comprises:
receiving, by the terminal device, first indication information from the network device, wherein the first indication information indicates the terminal device to clear the stored identification information.

7. The method according to any one of claims 1 to 5, wherein the method further comprises:
receiving, by the terminal device, first indication information from the network device, wherein the first indication information comprises the first identification information, and the first indication information indicates the terminal device to clear the first identification information.

8. The method according to any one of claims 1 to 7, wherein
the first information further comprises area identification information, the area identification information indicates one or more areas associated with the first identification information, and the first identification information is valid in the area indicated by the area identification information.

9. The method according to claim 8, wherein
the area identification information comprises one or more of the following: identification information of one or more areas, identification information of one or more core network devices, and identification information of one or more public land mobile networks PLMNs.

10. The method according to any one of claims 1 to 9, wherein the method further comprises:
receiving, by the terminal device, configuration information of a second timer from the network device;
determining, by the terminal device, that data transmission is completed or communication ends, and starting the second timer; and
skipping, by the terminal device, receiving downlink information before the second timer expires.

11. The method according to any one of claims 1 to 10, wherein the method further comprises:
determining that the second information does not comprise the first identification information, and responding, by the terminal device, to the second information.

12. A communication method, comprising:
sending, by a network device, first information to a terminal device, wherein the first information indicates the terminal device to access a network, the first information comprises first identification information, and the first identification information indicates one or more of the following: a first event, a first session, and a first coverage level; and
sending, by the network device, second information to the terminal device, wherein the second information indicates the terminal device to access a network.

13. The method according to claim 12, wherein
the second information comprises the first identification information; and
the network device receives no response of the terminal device to the second information.

14. The method according to claim 12 or 13, wherein
the first information is broadcast information, multicast information, paging signaling, or select signaling; and/or
the second information is broadcast information, multicast information, paging signaling, or select signaling.

15. The method according to any one of claims 12 to 14, wherein
the first information further comprises first configuration information, the first configuration information is configuration information of a first timer, and the first timer is used by the terminal device to determine that the first timer does not expire and skip responding to the second information comprising the first identification information.

16. The method according to any one of claims 12 to 15, wherein the method further comprises:
sending, by the network device, first indication information to the terminal device, wherein the first indication information indicates the terminal device to clear stored identification information.

17. The method according to any one of claims 12 to 15, wherein the method further comprises:
sending, by the network device, first indication information to the terminal device, wherein the first indication information comprises the first identification information, and the first indication information indicates the terminal device to clear the first identification information.

18. The method according to any one of claims 12 to 17, wherein
the first information further comprises area identification information, the area identification information indicates one or more areas associated with the first identification information, and the first identification information is valid in the area indicated by the area identification information.

19. The method according to claim 18, wherein
the area identification information comprises one or more of the following: identification information of one or more areas, identification information of one or more core network devices, and identification information of one or more public land mobile networks PLMNs.

20. The method according to any one of claims 12 to 19, wherein the method further comprises:
sending, by the network device, configuration information of a second timer to the terminal device, wherein the second timer is used by the terminal device to skip receiving downlink information before the second timer expires.

21. The method according to any one of claims 12 to 20, wherein the method further comprises:
receiving, by the network device from a core network device, one or more of the following: the first information, the second information, the first indication information, and the configuration information of the second timer, wherein the first indication information indicates the terminal device to clear the stored identification information, or the first indication information comprises the first identification information, and the first indication information indicates the terminal device to clear the first identification information; and the second timer is used by the terminal device to skip receiving the downlink information before the second timer expires.

22. A communication method, comprising:
sending, by a core network device, first information to a network device, wherein the first information indicates a terminal device to access a network, the first information comprises first identification information, and the first identification information indicates one or more of the following: a first event, a first session, and a first coverage level; and
sending, by the core network device, second information to the network device, wherein the second information indicates the terminal device to access a network.

23. The method according to claim 22, wherein
the second information comprises the first identification information; and
the core network device receives no response of the terminal device to the second information.

24. The method according to claim 22 or 23, wherein
the first information is broadcast information, multicast information, paging signaling, or select signaling; and/or
the second information is broadcast information, multicast information, paging signaling, or select signaling.

25. The method according to any one of claims 22 to 24, wherein
the first information further comprises first configuration information, the first configuration information is configuration information of a first timer, and the first timer is used by the terminal device to determine that the first timer does not expire and skip responding to the second information comprising the first identification information.

26. The method according to any one of claims 22 to 25, wherein the method further comprises:
sending, by the core network device, first indication information to the network device, wherein the first indication information indicates the terminal device to clear stored identification information.

27. The method according to any one of claims 22 to 25, wherein the method further comprises:
sending, by the core network device, first indication information to the network device, wherein the first indication information comprises the first identification information, and the first indication information indicates the terminal device to clear the first identification information.

28. The method according to any one of claims 22 to 27, wherein
the first information further comprises area identification information, the area identification information indicates one or more areas associated with the first identification information, and the first identification information is valid in the area indicated by the area identification information.

29. The method according to claim 28, wherein
the area identification information comprises one or more of the following: identification information of one or more areas, identification information of one or more core network devices, and identification information of one or more public land mobile networks PLMNs.

30. The method according to any one of claims 22 to 29, wherein the method further comprises:
sending, by the core network device, configuration information of a second timer to the network device, wherein the second timer is used by the terminal device to skip receiving downlink information before the second timer expires.

31. A communication method, comprising:
receiving, by a first terminal device, third information from a network device, wherein the third information is used to select one or more terminal devices to access a network, the third information is associated with a second coverage level, and the one or more terminal devices comprise the first terminal device;
receiving, by the first terminal device, fourth information from the network device, wherein the fourth information indicates an access resource, the fourth information is associated with a third coverage level, and a coverage area corresponding to the third coverage level is less than a coverage area corresponding to the second coverage level;
performing, by the first terminal device, random access based on the third information and the access resource indicated by the fourth information;
receiving, by the first terminal device, fifth information from the network device, wherein the fifth information indicates an access resource; and
determining that the first terminal device successfully performs access based on the access resource indicated by the fourth information, determining that data transmission is completed or communication ends, and skipping, by the first terminal device, responding to the fifth information.

32. The method according to claim 31, wherein
the second coverage level is associated with a first transmission parameter, wherein the first transmission parameter comprises one or more of the following: a first repetition count, a first modulation and coding scheme, and a first transmission bandwidth of a bit/a block/information; and
the third coverage level is associated with a second transmission parameter, wherein the second transmission parameter comprises one or more of the following: a second repetition count, a second modulation and coding scheme, and a second transmission bandwidth of a bit/a block/information.

33. The method according to claim 32, wherein
the first repetition count is greater than the second repetition count; or
a modulation order of the first modulation and coding scheme is lower than that of the second modulation and coding scheme; or
the first transmission bandwidth is less than the second transmission bandwidth.

34. The method according to any one of claims 31 to 33, wherein the method further comprises:
the fifth information is associated with the second coverage level.

35. The method according to any one of claims 31 to 34, wherein the fourth information comprises a first flag bit, and the performing, by the first terminal device, random access based on the third information and the access resource indicated by the fourth information comprises:
determining that a flag bit of the first terminal device is the first flag bit, and performing, by the first terminal device, random access based on the access resource indicated by the fourth information; and
determining that the first terminal device successfully performs access, and adjusting, by the first terminal device, the first flag bit to a second flag bit.

36. The method according to any one of claims 31 to 34, wherein the fifth information comprises a first flag bit, and the method further comprises:
determining that a flag bit of the first terminal device is the first flag bit, and performing, by the first terminal device, random access based on the access resource indicated by the fifth information; and determining that the first terminal device successfully performs access, and adjusting, by the first terminal device, the first flag bit to a second flag bit; or
determining that a flag bit of the first terminal device is a second flag bit, and skipping, by the first terminal device, responding to the fifth information.

37. A communication method, comprising:
sending, by a network device, third information to a first terminal device, wherein the third information is used to select one or more terminal devices to access a network, the third information is associated with a second coverage level, and the one or more terminal devices comprise the first terminal device;
sending, by the network device, fourth information to the first terminal device, wherein the fourth information indicates an access resource, the access resource is used by the first terminal device to perform random access, the fourth information is associated with a third coverage level, and a coverage area corresponding to the third coverage level is less than a coverage area corresponding to the second coverage level;
receiving, by the network device, a response of the first terminal device to the fourth information;
sending, by the network device, fifth information to the first terminal device, wherein the fifth information indicates an access resource; and
receiving, by the network device, no response of the first terminal device to the fifth information.

38. The method according to claim 37, wherein
the second coverage level is associated with a first transmission parameter, wherein the first transmission parameter comprises one or more of the following: a first repetition count, a first modulation and coding scheme, and a first transmission bandwidth of a bit/a block/information; and
the third coverage level is associated with a second transmission parameter, wherein the second transmission parameter comprises one or more of the following: a second repetition count, a second modulation and coding scheme, and a second transmission bandwidth of a bit/a block/information.

39. The method according to claim 38, wherein
the first repetition count is greater than the second repetition count; or
a modulation order of the first modulation and coding scheme is lower than that of the second modulation and coding scheme; or
the first transmission bandwidth is less than the second transmission bandwidth.

40. The method according to any one of claims 37 to 39, wherein the method further comprises:
the fifth information is associated with the second coverage level.

41. A communication apparatus, wherein the communication apparatus comprises a processor, and the processor is configured to run a computer program or instructions, to enable the communication apparatus to perform the communication method according to any one of claims 1 to 11, perform the communication method according to any one of claims 12 to 21, perform the communication method according to any one of claims 22 to 30, perform the communication method according to any one of claims 31 to 36, or perform the communication method according to any one of claims 37 to 40.

42. A computer-readable storage medium, wherein the computer-readable storage medium stores computer instructions or a program, and when the computer instructions or the program is run on a computer, the communication method according to any one of claims 1 to 11 is performed, the communication method according to any one of claims 12 to 21 is performed, the communication method according to any one of claims 22 to 30 is performed, the communication method according to any one of claims 31 to 36 is performed, or the communication method according to any one of claims 37 to 40 is performed.

43. A computer program product, wherein the computer program product comprises computer instructions, and when some or all of the computer instructions are run on a computer, the communication method according to any one of claims 1 to 11 is performed, the communication method according to any one of claims 12 to 21 is performed, the communication method according to any one of claims 22 to 30 is performed, the communication method according to any one of claims 31 to 36 is performed, or the communication method according to any one of claims 37 to 40 is performed.
